Europäisches Patentamt

European Patent Office

Office européen des brevets

(19)

(11) EP 0 805 827 B1

(12) **EUROPÄISCHE PATENTSCHRIFT**

(45) Veröffentlichungstag und Bekanntmachung des Hinweises auf die Patenterteilung:
**22.12.1999 Patentblatt 1999/51**

(51) Int Cl.$^6$: **C08F 255/00**, C08F 291/00, C08F 8/00

(21) Anmeldenummer: **96900838.2**

(22) Anmeldetag: **23.01.1996**

(86) Internationale Anmeldenummer:
**PCT/DE96/00087**

(87) Internationale Veröffentlichungsnummer:
**WO 96/23011 (01.08.1996 Gazette 1996/35)**

(54) **VERFAHREN ZUR HERSTELUNG FUNKTIONALISIERTER POLYMERE**

PROCESS FOR PRODUCING FUNCTIONALISED POLYMERS

PROCEDE DE PRODUCTION DE POLYMERES FONCTIONNALISES

(84) Benannte Vertragsstaaten:
**AT DE FR IT NL**

(30) Priorität: **25.01.1995 DE 19502206**

(43) Veröffentlichungstag der Anmeldung:
**12.11.1997 Patentblatt 1997/46**

(73) Patentinhaber: **Buna Sow Leuna Olefinverbund GmbH**
**06258 Schkopau (DE)**

(72) Erfinder:
* **GERECKE, Jochen**
**D-06122 Halle (DE)**
* **WULFF, Dirk**
**D-06126 Halle (DE)**

* **GRUBER, Klaus**
**D-06128 Halle (DE)**
* **HOFMANN, Tatjana**
**D-06124 Halle (DE)**
* **STUDE, Joachim**
**D-04279 Leipzig (DE)**
* **NAGEL, Marion**
**D-06217 Merseburg (DE)**

(56) Entgegenhaltungen:
**DE-A- 2 554 943**          **GB-A- 1 383 017**

* **DATABASE WPI Section Ch, Week 8438 Derwent Publications Ltd., London, GB; Class A13, AN 84-234422 XP002004162 & JP,A,59 140 207 (DENKI KAGAKU KOGYO KK) , 11.August 1984**

**Beschreibung**

Die Erfindung betrifft ein Verfahren zur Herstellung funktionalisierter Polymerer mittels radikalischer Festphasenpfropfpolymerisation von $\alpha$, $\beta$ - ethylenisch ungesättigten, funktionelle Gruppen besitzenden Verbindungen auf olefinische und/oder dienische Thermoplaste und Elastomere.

Es ist bekannt, sowohl olefinische Homo- und Copolymere als auch dienische Homo- und statistische bzw. alternierende Co-sowie besonders Blockcopolymere, vielfach auch in selektiv hydrierter Form, für die ein breiter anwendungstechnischer Bereich, d. h. von den üblichen Thermoplasten bis hin zu technisch bedeutenden Kautschuken und thermoplastischen Elastomeren (TPE) vorhanden ist, für verschiedene wichtige Einsatzgebiete durch Ein- bzw. nachträgliches Aufpolymerisieren von spezielle funk-tionelle Gruppen besitzenden Monomeren (sogenannte Funktionsmonomere) in die Stamm- bzw. auf die Rückgratpolymerkette gezielt chemisch zu modifizieren.

Als Rückgratpolymerisate können außer den Homopolyolefinen (PO), wie Polyethylenen (PE) und Polypropylenen (PP), vor allem olefinische und/oder dienische Copolymere und Blockcopolymere, insbesondere Ethylen/Propylen-Copolymere (EPM), Ethylen/Propylen/Dien(Dicyclopentadien und/oder Norbornen)Terpolymere (EPDM), Ethylen/Vinylacetat-Copolymere (EVA, EVM), Ethylen/(Meth-)Acrylat-Copolymere (EAM), Styren/Ethylen-Butylen/Styren-(SEBS) und Styren/Ethylen-Propylen/Styren-Dreiblockcopolymere (SEPS), einschließlich ihrer Mischungen untereinander, wie EPM bzw. EPDM/PO (PE und/oder PP) und SEBS bzw. SEPS/PO und/oder EPM bzw. EVA, und nicht zuletzt auch die klassischen Kautschuke auf Basis konjugierter Diene, wie 1,4 cis-Polybutadien (BR), Polyisopren (IR) bzw. Naturkautschuk (NR), statistische Styren/Butadien-Copolymere (SBR), Acrylnitril/Butadien-Copolymere (NBR) und Styren/Butadien oder Isopren-Zweiblockcopolymere (SB, SI) bzw. die entsprechenden Drei- bzw. Vierblockcopolymeren (SBS, SIS bzw. SBSB und dgl.) oder radiale Styren/Butadien-Blockcopolymere ($(S-B)_n$ X mit n = 3-12, X = Kupplungsagens) eingesetzt werden. Neben der Verwendung der funktionalisierten Basispolymeren als adhäsionsfestes Folien- und Beschichtungsmaterial (US 4.394 485), sind sie vor allem als gut haftende bzw. verträgliche Komponente in Verbundfolien, Laminaten und bevorzugt in unterschiedlichen thermoplastischen Formmassen geeignet.

Die besonders auf dem Automobil-, Haushaltsgeräte- und Elektro- bzw. (Mikro-)Elektroniksektor verwendeten technischen Thermoplaste benötigen generell einen Haft- bzw. Verträglichkeitsvermittler, insbesondere gegenüber anderen Polymerkomponenten aber auch Nichtpolymermaterialien, der zumeist gleichzeitig eine deutliche (Kerb-) Schlagzähverbesserung bewirkt.

Von den für obengenannte Einsatzgebiete in der Regel verwendeten Thermoplasten, die vielfach aufgrund ihrer endständigen reaktiven Gruppen chemisch gut modifizierbar sind, besitzen vor allem die Polyamide und gesättigten Polyester, weiterhin thermoplastische Polyurethane, Polyphenylether, Polyphenylensulfide u.a., einschließlich ihrer Kombinationen untereinander sowie Blends unter Einbeziehung weiterer Thermoplaste, insbesondere PO, Polystyrene (PS) bzw. Styrencopolymerer, die größte Bedeutung. (DE 2622973 bzw. US 4.174 358, US 4.172 859; EP 0279 578, EP 0234 819, EP 0180 302; US 4.628 072, US 4.657 970, US 4.657 971; EP 0415 344; US 3.668 274, US 3.972 961, US 4.017 557;Ide und Hasegawa, J. Appl. Polym. Sci. 18(1974), 963, US 4.427 828, US 4.508 874, US 3.972 961, US 4.017 557, US 4.863 996; WO 87/00540, WO 86/04076; US 4.594 386; WO 88/07065).

Die Modifizierung der olefinischen sowie auch (ungesättigten) dienischen Polymeren kann nach verschiedenen Pfropfpolymerisationsverfahren erfolgen.

Aufgrund ihrer Unwirtschaftlichkeit sowie der insgesamt geringen erreichbaren Modifizierungsgrade haben Lösungs- und Dispersions-Pfropftechnologien, die auf der Verwendung flüssiger organischer und/oder wäßriger Trägerphasen beruhen (EP 0074811, EP 0187659, DE 2023154, DE 2329780, DE 2420942), zur Funktionalisierung olefinischer Rückgrate keine oder nur geringe kommerzielle Bedeutung.

Auch unhydrierte sowie selektiv hydrierte Styren/konjugierte Dien-Blockcopolymere können - analog zur Maleinisierung von Polyisopren (JP 20294/74) - mittels Pfropfung von Mono- und Dicarbonsäuren und deren Derivaten, insbesondere Maleinsäureanhydrid (MSA), in einem organischen Lösungsmittel funktionalisiert werden (US 4.308 353, EP 0173 380).

Aber auch hierfür hat sich das Arbeiten mit großen Mengen an Lösungsmitteln, einschließlich deren Rückgewinnung/ Wiederaufbereitung sowie die Berücksichtigung physiologischer sowie brandschutztechnischer Aspekte, als Hindernis für eine kommerzielle Nutzung herausgestellt.

Die überwiegende Anzahl an verwendeten funktionalisierten olefinischen Thermoplasten/Elastomeren wird im technischen Maßstab mittels radikalischer Schmelzepfropfung, im allgemeinen in einem Extruder oder Kneter bei Temperaturen zwischen 150 und 300 °C, hergestellt (EP 0128775, EP 0235876, EP 0266221, EP 0287140, EP 0299499, EP 0371001, DE 1694126, DE 2242324, DE 2326589, DE 2401149, US 3873643, US 3987122, US 4578429, US 4927889).

Auch ungesättigte Styren/Butadien/Styren-Dreiblockcopolymere (SBS) werden durch Aufpfropfen von ungesättigten Mono- oder Dicarbonsäuren bzw. deren Derivaten, insbesondere MSA, unter Schmelzemischbedingungen in Abwesenheit eines radikalischen Initiators unter Verwendung von Radikalinhibitoren zwecks Unterdrückung unerwünschter Vernetzungen bzw. Gelbildungen funktionalisiert (US 4.292 414). Um eine solche Additions-Funktionalisierung, auch als "ENE"-Reaktion bezeichnet, durchzuführen, ist ein Mindestanteil an ungesättigten Bindungen in den dienischen Weichsegmenten notwendig.

Da auch die selektiv hydrierten Styren/Dien/Blockcopolymeren über einen zumeist geringen (zwischen 0,2 und 20 %) aber ausreichenden Grad an Restungesättigtheit in ihren Olefinblöcken verfügen, sind diese mittels "ENE"-Reaktion funktionalisierbar (US 4.427 828, US 4.508 874, EP 0155995). Bei Verwendung von MSA als Funktionsmonomer führt die MSA-Addition zu bevorzugt in Allylstellung angehängten Bernsteinsäureanhydridgruppen, die thermisch äußerst instabil sind und relativ leicht wieder abgespalten werden ("Kontra-ENE"-Reaktion).

Die in der Schmelze modifizierten SBS- oder auch SIS-Dreiblockcopolymeren, einschließlich ihrer durch ein-, zwei- oder dreiwertige Metallionen vernetzten Produkte, können zur verarbeitungs- und anwendungstechnischen Ausrüstung von Polystyren (PS) (US 4.308 353), PS/PO-Mischungen (DE 4217470, DE 3643008, US 4.518 681, EP 0289926, EP 0310051) sowie für die Modifizierung technischer Thermoplaste und Hochleistungskunststoffe, wie besonders Polyamide (PA), thermoplastische Polyester wie Polyethylen- und Polybutylenterephthalat (PET und PBT), Polycarbonate (PC) und Polyestercarbonate (PEC), Polyphenylenether (PPE), Polyphenylensulfide (PPS), thermoplastische Polyurethane (TPU), Polyoxymethylene (POM), Polymethacrylate (PMMA), verseifte Ethylen-Vinylacetat-Copolymere/Ethylen-Vinylalkohol-Copolymere mit unterschiedlichem Verseifungsgrad (EVAL) und andere, einschließlich deren Blends mit Styrenpolymeren und PO, verwendet werden (GB 2053238). Thermisch stabilere und im wesentlichen unvernetzte (gelfreie) Pfropfprodukte mit insgesamt verbesserten verarbeitungs- und anwendungstechnischen Eigenschaften werden durch Aufpfropfen von carboxylgruppenhaltigen Monomeren und deren Derivaten, insbesondere MSA, auf Blockcopolymere mit geringem ethylenischen Unsättigungsgrad im polymerisierten Dienblock, insbesondere SEBS und SEPS mit einer zumeist hohen 1,2-Konfiguration entsprechend hoher Vinylgruppengehalte der Dien-Mittelblöcke im unhydrierten Ausgangsprodukt (SBS und SIS), im allgemeinen unter Schmelzepfropfbedingungen bei Verwendung eines radikalischen peroxidischen Initiators im Extruder erhalten (EP 0173380, EP 0262691, EP 0371001, EP 0282664, US 4.578 429, US 4.628 072, US 4.657 970, US 4.657 971).

In diesem Falle findet die Pfropfung des MSA oder der anderen Funktionsmonomeren - im Unterschied zur "ENE"-Addition - überwiegend an den tertiären und sekundären Kohlenstoffatomen der Olefin (EB bzw. EP)-Segmente statt (US 4.578 429).

Die Funktionalisierung in Form einer Maleinisierung bzw. Carboxylierung in der Schmelze ist trotz ihrer vielfach technischen Nutzung mit einer Reihe von allgemeinen Problemen behaftet. Das ist vor allem auf die hohen Temperaturen, im allgemeinen zwischen 200 und 300 °C im Extruder oder Kneter unter hohen Scherkräften, und den damit verbundenen unerwünschten Reaktionen, insbesondere Polymervernetzungs- und -abbaureaktionen sowie Nebenreaktionen (Homopolymerbildung) und/oder geringe bzw. nur teilweise Polymerisation (Entweichen der flüchtigen Monomeren) der Funktionsmonomeren zurückzuführen.

Da die Schmelzepfropfung unter obengenannten Bedingungen insgesamt in kurzen Reaktionszeiträumen, im allgemeinen zwischen etwa 3 und maximal 20 Minuten, erfolgt sein muß, beschränken sich die möglichen Schmelzepfropfsysteme auf solche Reaktanten und Komponenten, die - unter gleichzeitiger Sicherung ihrer chemischen Stabilität, der weitestgehenden Verhinderung ihres Entweichens aus der Reaktionszone sowie der Vermeidung ihrer korrodierenden Wirkung auf das Werkzeugmaterial - sich im Reaktionsmedium gut verteilen und zwar nicht schlagartig (Gefahr einer hohen Homopolymerbildung bzw. geringen Pfropfausbeute und eines sehr niedrigen Pfropfgrades) aber in der kurzen verfügbaren Reaktionszeit fast vollständig umgesetzt sein müssen.

Aus dem Vorhergesagten kann geschlußfolgert werden, daß sich höhere Monomer- und auch Initiatorkonzentrationen zwecks Erreichung höherer Funktionalisierungsgrade von vornherein verbieten. Deshalb sind praktisch nur wenige Funktionsmonomere, außer dem bevorzugt verwendeten MSA zumeist nur höhere ungesättigte (Di-)Carbonsäuren bzw. deren Anhydride, für die Pfropfung auf die verschiedenen Rückgratpolymere gut geeignet.

Damit ist die Variationsmöglichkeit hinsichtlich der Einstellbarkeit der Konzentration an Carboxyl- bzw. Säureanhydridgruppen oder auch an anderen funktionellen Gruppen und damit der adhäsiven (Haft- bzw. Verträglichkeits-) Wirkung stark eingeschränkt.

Wird die Pfropfreaktion unterhalb der Polymer-Rückgrat-Schmelztemperatur, im allgemeinen zwischen 40 und 130 °C unter Ausschluß flüssiger wäßriger und/oder organischer Suspensions(Emulsions)- bzw. Lösungsmittelphasen, einschließlich des (der) Monomeren selbst als eigenständig flüssige Phase, durchgeführt, können besonders aus überwiegend Styren und einem Funktionsmonomer, wie Acrylsäure, zusammengesetzte Monomermischungen in speziell ausgebildeten PO bzw. Olefincopolymer/Monomer-Gelmischphasen (DD 135 622) oder - bei Vorliegen der Monomeren im gasförmigen Zustand (IT 867340, US 3.162 697) - in Form einer Gasphasenpfropfung (JP 03285936, JP 03285937, JP 03285938), letztere insbesondere zur Herstellung von Verträglichkeitsvermittlern für PA/PO-, PC/PO und PBT/PO-Blends, copolymerisiert werden.

Im Unterschied zu der in der Polymerschmelze oder auch in flüssigen wäßrigen und/oder organischen Medien durchgeführten Pfropf-Funktionalisierung der als Rückgratpolymeren verwendeten Thermoplaste und Elastomere kann dieses Pfropfpolymerisationsverfahren aufgrund der "festen" Konsistenz der Reaktionsmischung bis zum Monomerendumsatz als Festphasenpfropfung bezeichnet werden.

Eine Reihe der für die Schmelze-Funktionalisierung grundsätzlichen Nachteile wird durch die Anwendung der äußerst wirtschaftlich durchführbaren radikalischen Festphasenpropftechnologie vermieden bzw. abgeschwächt, wobei die verschiedenen möglichen Rückgratpolymeren - praktisch von den Thermoplasten (PO, wie PE und PP oder EVA) über die thermoplastischen Elastomeren (TPE), insbesondere solchen auf Basis von hartes PS-Segment/weiches (elastisches) Dien- oder Olefinoligomer-Segment/hartes PS-Segment (TPE-S) oder von vernetzten EP(D)M/PO-Compounds (TPE-O) bis hin zu den Elastomeren (EPM, EPDM, EVM; BR, IR, SBR, NBR; SB, SI) - sowie die unterschiedlichen Pfropfmonomeren bzw. Pfropfmonomergemische, einschließlich Zusammensetzungen aus Funktions- und nicht-funktionellen Zusatz-Comonomeren, unter Berücksichtigung der für die einzelnen Pfropfsysteme spezifischen Bedingungen eingesetzt werden können (DD 136971, DD 275159, DD 275160, DD 275161, DD 266358, DD 290431, DD 290432, DD 300977, DE 4123972, DE 4217469, DE-A P 4342605.0, EP 0469693, EP 0263887, EP 0265527).

Ein nicht bzw. für eine ganze Reihe interessanter Pfropfsysteme nur unzureichend gelöstes Problem der mittels Festphasenpropftechnologie erhaltenen funktionalisierten Thermoplaste/Elastomeren sind deren generell sehr hohen Vernetzungsgrade, die zwar für verschiedene Einsatzgebiete sogar vorteilhaft sein können, aber für andere Verwendungen sehr nachteilig sind. Das betrifft vor allem die zu funktionalisierenden anspruchsvolleren und gleichzeitig wesentlich teureren Kautschuke und TPE, insbesondere solche mit höheren Molekulargewichten (Mw ≥ 100.000), sowie die Verwendung von carboxylgruppenhaltigen Monomeren in höheren Konzentrationen (> 2 Masse-%) bei gleichzeitiger Sicherung hoher Monomerumsätze und Pfropfausbeuten, beides wesentliche Voraussetzungen für hochwirksame Schlagzähmodifikatoren, insbesondere im Tieftemperaturbereich (0 °C bis ca. -50 °C), unter Berücksichtigung eines insgesamt hohen mechanischen und thermischen Eigenschaftsniveaus und einer guten Verarbeitbarkeit der mit den funktionalisierten Polymeren modifizierten thermoplastischen Formmassen.

Der Erfindung liegt daher die Aufgabe zugrunde, ein Verfahren zur Herstellung funktionalisierter Polymerer unter Verwendung olefinischer und/oder dienischer Rückgratpolymerer sowie verschiedener $\alpha$, $\beta$-ethylenisch ungesättigter Verbindungen mit funktionellen Gruppen (Funktionsmonomere) auf der Grundlage einer ökonomischen Pfropftechnologie bei gleichzeitiger Ausschaltung der unter Pfropfpolymerisationsbedingungen in flüssiger wäßriger und/oder organischer Phase oder in der Schmelze auftretenden Nachteile, insbesondere in bezug auf die eng begrenzte Wahl der Funktionalitätseinstellung der olefinischen und/oder dienischen Pfropfsubstrate und des damit eingeschränkten Pfropfproduktkennwertniveaus, mit einer gegenüber den mittels bekannter Festphasenpropfpolymerisation erhaltenen Pfropfprodukten höheren Adhäsionsfestigkeit bzw. Modifizierwirkung beim Einsatz als Haftvermittler/Schlagzähmodifikator in einer großen Anzahl von thermoplastischen Formmassen zu entwickeln.

Erfindungsgemäß werden die funktionalisierten Polymeren durch Festphasenpropfpolymerisation hergestellt unter Verwendung von olefinischen Homo-und/oder (Block-)Copolymeren und/oder konjugierten dienischen Homo- sowie statistischen bzw. alternierenden Copolymeren und/oder Blockcopolymeren, einschließlich der entsprechenden selektiv hydrierten Polymeren, mit gewichtsmittleren Molekulargewichten Mw von 10.000 bis 1.000.000 als Rückgratpolymere und von 0,05 bis 50 Masseteilen, bezogen auf 100 Masseteile Rückgratpolymerisat, mindestens einer aufgepfropften Moleküleinheit, enthaltend mindestens eine funk-tionelle Gruppe, ausgewählt unter Mono- und Dicarboxylgruppen, einschließlich davon abgeleiteten Gruppen, wie Amid- bzw. Imid-, Halbester- und besonders Anhydridgruppen, Hydroxy- und Epoxygruppen, Aminogruppen und Silangruppen, sowie gegebenenfalls mindestens einer weiteren cogepfropften Moleküleinheit ohne die genannten funktionellen Gruppen, wie Styren- bzw. substituierte Styren- und/oder (Meth-)Acrylateinheiten, in einem Massenverhältnis Monomer(e) mit funktionellen Gruppen (Funktionsmonomer(e)) zu Monomer(e) ohne genannte funktionelle Gruppen (Zusatzcomonomer(e)) 1 bis 100 % zu 0 bis 99 %, wobei der auf die Rückgratpolymermasse bezogene Gesamtanteil an aufgepfropften Funktions- plus Zusatzcomonomeren 0,05 bis 50 % beträgt, wobei die Rückgratpolymermasse einen vor der Funktionalisierungs-Pfropfreaktion hinzugefügten Anteil eines mineralischen, insbesondere paraffinischen und/oder naphthenischen und/oder aromatischen Öls und/oder eines nativen, insbesondere pflanzlichen Öls in einer Menge von 10 Masseteilen bis zu einer Maximalkonzentration entsprechend der Aufnahmefähigkeit der als Rückgratpolymerisate eingesetzten Polymeren unter Aufrechterhaltung ihrer trocken-fließfähigen Konsistenz über den gesamten Pfropfpolymerisationsprozeß in den Grenzen von 20 bis 400 Masseteilen, insbesondere bis 200 Masseteilen, jeweils bezogen auf 100 Masseteile Rückgratpolymerisat, enthält.

Der Zusatz einer - unter Berücksichtigung der Aufnahmekapazität des einzelnen Rückgratpolymerisates - in weiten Grenzen wählbaren Ölmenge, der besonders auch eine kosten-verringernde Handlung ist, führt zu funktionalisierten Pfropfprodukten mit einer überraschend breit variierbaren Modifizierwirkung bei ihrer Einarbeitung in unterschiedliche thermoplastische Formmassen, einschließlich Polymerblends und -composites.

Bei geeigneter Wahl des Pfropfsystems, vor allem unter Verwendung spezieller thermoplastischer Elastomerer mit höheren Molekulargewichten ($\overline{M}$w ≥ 200.000) als Rückgratpolymere, die sich generell ohne Ölzusatz nur schwierig, insbesondere nur mit geringer Pfropfausbeute, funktionalisieren lassen, sowie Acryl- und/oder Methacrylsäure bzw. ihren Homologen und/oder MSA sowie weiteren Funktionsmonomeren, die bis zu Pfropfgraden ≥ 2 Masse-% auf das Rückgrat gepfropft werden, werden funktionalisierte, vorzugsweise carboxylierte Polymere erhalten, die einer Vielzahl thermoplastischer Formmassen eine hohe, oft sprunghaft ansteisteigende Tieftemperaturzähigkeit unter Sicherung aller anderen wichtigen anwendungs- und verarbeitungstechnischen Eigenschaften auf dem erforderlichen Niveau für anspruchsvolle Einsatzgebiete verleihen. Hierin offenbart sich auf überraschende Weise die erfindungsgemäße Lösung, die unmittelbar auf die spezifischen technologischen Möglichkeiten der Festphasen-Pfropfmodifizierung unter Verwendung einer recht breiten Palette an verwendbaren Rückgratpolymeren sowie Funktionsmonomeren und gegebenenfalls Zusatzcomonomeren zurückzuführen ist.

Neben der generellen Verwendbarkeit der nativen Öle, insbesondere von pflanzlichen Ölen (Glyceride von überwiegend ungesättigten Fettsäuren), wie z.B. Rüb- bzw. Rapsöle, Sojaöle usw., ferner auch von tierischen Ölen (Glyceride von überwiegend gesättigten Fettsäuren) (ULLMANN Bd. 11, S. 455 - 524 "Fette und Öle"; Verlag Chemie Weinheim 1976), sind besonders die bekannten gesättigten Mineralöle, die zum paraffinischen, zum relativ naphthenischen bzw. naphthenischen, zum relativ aromatischen bzw. aromatischen Prozeßöltyp gehören und vielfach in Gummiprodukten als Mineralölweichmacher eingesetzt werden, für die erfindungsgemäßen funktionalisierten Polymeren geeignet. Auch andere ölige Kohlenwasserstoffprodukte, wie z.B. flüssige Polybutene, sind in den erfindungsgemäßen Produkten einsetzbar.

Besonders bevorzugt werden mineralische Öle vom paraffinischen oder relativ naphthenischen bzw. naphthenischen Prozeßöltyp, die eine Kohlenstoffverteilung $C_{Aromat.}$ zu $C_{Naphthen.}$ zu $C_{Paraffin.}$ von 0 bis 10 zu 20 bis 45 zu 45 bis 80 aufweisen und denen Viskositäts-Dichte-Konstanten (VDK) zwischen 0,80 und 0,90 zuzuordnen sind (E. Balint, Gummi, Fasern, Kunststoffe (GAK) (1993)6, S. 286 - 290).

Mögliche Ölzusätze zum Schmelze- oder auch Lösungspfropfpolymerisationsansatz sind zwar bekannt (EP 0173380, EP 0266221), haben aber nur eine untergeordnete Bedeutung bzw. stellen keine zwingende, den Pfropfprozeß und besonders die Eigenschaften der funktionalisierten Pfropfprodukte wesentlich beeinflussende Maßnahme dar. Das ist auch nicht zu erwarten, denn aufgrund der spezifischen Schmelze- und Lösungspfropfbedingungen ist ein solcher Zusatz nicht bzw. nur im geringen Umfang wirksam, da das Öl, vor allem bei Verwendung höherer Anteile, sich größtenteils außerhalb der Reaktionsphase befindet, was darüber hinaus zu empfindlichen technisch-technologischen Störungen innerhalb des Gesamtprozesses führt.

Außerdem wird bei der Herstellung von in der Schmelze maleinisierten selektiv hydrierten Styren/Dien-Blockcopolymeren die Wirksamkeit von Öl als ein dem Pfropfpolymerisationsansatz hinzusetzbarer Fließverbesserer an keiner Stelle belegt (EP 0173380).

Und auch der mögliche Mineralölzusatz zum Schmelzepfropfansatz bei der Herstellung ausschließlich peroxidisch hochvernetzter (hochgelhaltiger) pfropffunktionalisierter Olefinelastomerer, die als Polyamid-Schlagzähmodifikatoren fungieren (EP 0266221), ist eine begrenzte und nur auf die Schmelzepfropfung bezogene, in keinerlei Zusammenhang mit der vorliegenden erfindungsgemäßen Aufgabenstellung stehende Maßnahme.

Im allgemeinen werden die kostenaufwendigeren thermoplastischen Elastomeren, wie die TPE-S auf Basis von ungesättigten und selektiv hydrierten (gesättigten) Styren/ Dien-Blockcopolymeren, gegebenenfalls auch in funktionalisierter Form, nicht direkt eingesetzt, sondern unter Berücksichtigung optimaler Gebrauchseigenschaften sowie eines deutlich kostengünstigeren Einsatzes mit unterschiedlichen Zuschlagstoffen "verschnitten", wobei ein breiter Bereich von TPE-S in Härteeinstellungen von < 30 Shore A bis > 65 Shore D einstellbar ist, bzw. als elastifizierende Komponente oder Schlagzähmodifikator thermoplastischen Formmassen hinzugesetzt.

Bekannt in diesem Zusammenhang ist auch die für Elastomere übliche Öl-Streckung, d.h. der Zusatz eines mineralischen Prozeßöls - nicht als Bestandteil des Polymerisationsansatzes, sondern unmittelbar bei der Herstellung der verarbeitungsfähigen Kautschukmischung - in Mengen von 50 bis 300 Masseteilen auf 100 Masseteile Elastomer, z.B. TPE-S in Form einer Mischung aus SEBS und maleinisiertem SEBS, die gegebenenfalls als weitere Komponente ein PO (US H 1022) oder generell weitere Elastomere und Harze enthalten kann (EP 0085115, EP 0216347).

Die erfindungsgemäßen funktionalisierten Polymeren, insbesondere die carboxylierten thermoplastischen Elastomeren des Typs TPE-S und auch TPE-O, zeichnen sich gegenüber bekannten funktionalisierten Thermoplasten/ Elastomeren, hergestellt nach der kommerziell angewandten Schmelzepfropftechnologie oder der äußerst unwirtschaftlichen Pfropffunktionalisierung in flüssiger organischer bzw. wäßriger Phase oder auch der Festphasen-Pfropffunktionalisierung ohne Ölzusatz im Pfropfpolymerisationsansatz, sowie gegenüber den nach diesen Verfahren erhaltenen funktionalisierten Produkten, die erst nach erfolgter Funktionalisierungsreaktion ölverstreckt worden sind, durch eine deutlich höhere Modifizierwirkung aus. Das drückt sich vor allem - unter Berücksichtigung der erst mittels erfindungsgemäßer Lösung erreichbaren Zugänglichkeit der breiten Rückgratpolymer-Palette, besonders hinsichtlich hochmolekularer TPE ($\overline{M}w \geq 200.000$) - auch im sprunghaften Anstieg der Zähigkeit, insbesondere der Kerbschlagzähigkeits-Kennwerte bei tiefen Temperaturen (0 °C bis ca. -50 °C), der mit den erfindungsgemäßen pfropffunktionalisierten Polymeren ausgerüsteten thermoplastischen Formmassen - bei gleichzeitiger Aufrechterhaltung bzw. sogar zumeist Erhöhung des gesamten mechanischen Niveaus (Festigkeits- und Steifigkeits- sowie Härte-Kennwerte) und der Wärmeformbeständigkeit gegenüber den mit bekannten vergleichbaren Modifikatoren ausgerüsteten Polymerformmassen - aus.

Da bei Verwendung vor allem der erfindungsgemäßen funktionalisierten TPE mit deutlich geringeren Anteilen - im Vergleich zu den bekannten, etwa gleiche oder ähnliche Funktionalisierungsgrade aufweisenden TPE - die gewünschte Modifizierwirkung erreicht wird, resultiert aus dem Einsatz der erfindungsgemäßen Produkte außer der durch die Ölstreckung schon an sich erreichten verbesserten Wirtschafftlichkeit eine zusätzliche Kosteneinsparung. Als mögliche Rückgratpolymere für die Herstellung der erfindungsgemäßen funktionalisierten Polymeren kann die breite Auswahl an bekannten olefinischen Homo-, gesättigten und ungesättigten Copolymeren sowie Blockcopolymeren genutzt werden.

Die wichtigsten verwendbaren Polyolefine (PO) sind:

Polyethylene mit niedriger Dichte (0,900 - 0,932 g/cm$^3$), einschließlich geringe Anteile ($\leq$ 3 Masse-%) an höheren Olefinen enthaltend, nach dem Hochdruckverfahren (PE-LD);

lineare Polyethylene niederer Dichte (0,915 - 0,935 g/cm$^3$) mittels Niederdruckpolymerisation (PE-LLD) (H. Münstedt u. H.-J. Walter, Kunststoffe 83(1993)10, S. 725 - 728);

Polyethylene hoher Dichte (0,940 - 0,980 g/cm$^3$) mittels unterschiedlicher Niederdruck- bzw. Mitteldruckpolymerisationsverfahren, gegebenenfalls unter Verwendung geringer Mengen an höheren Olefinen erhalten (PE-HD) (C. Gondro, Kunststoffe 83(1993)10, S. 729 - 732);

isotaktische Polypropylene (PP), einschließlich die durch Einpolymerisieren höherer Olefine erhaltenen Random- oder Blockcopolymeren, bevorzugt hergestellt mittels Suspensions(Slurry)-, Gasphasenverfahren oder einer Kombination aus Masse(Bulk)- und Gasphasenpolymerisation, wobei neben den Standardprodukten auch solche, die den technischen Kunststoffen in wichtigen Eigenschaften entsprechen und unter der Bezeichnung "PP based Advanced Materials" (PPAM) gehandelt werden, verwendet werden können (... Kunststoffe 83(1993)10, S. 732 - 737);

weitere olefinische Homopolymere, wie Polybuten-1 (PB), Polyisobutylen (PIB) und C$_5$- bis C$_{12}$-Polyolefine.

Die wichtigsten Olefincopolymeren sind:

Unpolare Co- und Terpolymere auf Basis der Polymerisation von Olefingemischen, gegebenenfalls unter Zusatz nicht-konjugierter Diene (Dicyclopentadien, 5-Ethyliden-2-norbornen u.a.), wie z.B. die elastomeren peroxid-vernetzbaren Ethylen/Propylen-Copolymeren (EPM) und die schwefel-vernetzbaren Ethylen/Propylen/Dien-Terpolymeren (EPDM), einschließlich die entsprechenden EP(D)M/PO (PE, PP)-Compounds, Vertreter der TPE-O-Klasse (W. Hofmann, Kunststoffe 84(1994)2, S. 109-111; ebenda 80(1990)10, S.1204-1209, 1210-1212).

Außer den unpolaren Olefincopolymeren können auch aus Olefin - sowie Vinylester - und/oder (Meth-)Acrylsäureestereinheiten aufgebaute polare olefinische Copolymere als Rückgratpolymerisate eingesetzt werden.

Bevorzugt geeignet ist die breite Palette an Ethylen/ Vinylacetat (VA)-Copolymeren (EVA) mit unterschiedlicher Zusammensetzung entsprechend VA-Gehalten von etwa 5 bis 95 Masse-%, einschließlich dem Teilbereich der Ethylen/ Vinylacetat-Kautschuke (EVM) mit einem VA-Gehalt zwischen etwa 40 und 80 Masse-%

(H. Streib u.a., Kunststoffe 67(1977)3, S. 118-121; E. Rohde, Kautsch. + Gum.-Kunstst. 45(1992)12, S. 1044-1051; K. Adler u. K.-P. Paul; Kunststoffe 70(1980)7, S. 411-418; DE 1126613, DE 1495660, DE 1495767, DE 2927088).

Weiterhin können die entsprechend der breiten EVA/EVM-Palette zusammengesetzten Ethylen/Acrylat-Kautschuke (AEM), z.B. Ethylen/Ethylacrylat-(EEA), Ethylen/n-Butylacrylat-(EBA) sowie Ethylen/(Methyl-)Methacrylat-Copolymere (EMA), als Rückgratpolymere eingesetzt werden.

Eine relativ neue und sehr erfolgversprechende Olefinpolymer-Produktklasse mit gezielt steuer- und variierbaren Mikrostrukturen und Molekulargewichten ist durch Anwendung von Metallocen-Katalysatoren, auch in bezug auf ihre Wirkungsweise als "Single-site"-Katalysatoren bezeichnet, erschlossen worden.

(EP 0416.815; J. Okuda, Nachr. Chem. Tech. Lab. 41(1993)1, S. 8-14; R. Mühlhaupt, Nachr. Chem. Tech. Lab. 41 (1993)12, S. 1341-1351).

Mit der Metallocen-Technologie können besonders Olefincopolymere aus Ethylen (Propylen) und höheren $\alpha$-Olefinen, vorzugsweise Octen, dessen anteilige Menge im Reaktor über die Zahl der C$_6$-Seitenketten entscheidet, erhalten werden. Als Rückgratpolymere entsprechend vorliegender Erfindung können bevorzugt verschiedene schon kommerziell vertriebene bzw. kurz vor der Markteinführung stehende Olefincopolymere dieser neuen Produktklasse verwendet werden.

Das betrifft vor allem die aus überwiegend Ethylen und bis maximal 20 % aus Octen erhaltenen Copolymeren, bekannt unter der Bezeichnung Polyolefin-Plastomere (POPs), sowie die entsprechenden "weicheren" Copolymeren mit mehr als 20 % Octen und als Polyolefin-Elastomere (POEs) bezeichnet, weiterhin die cycloaliphatischen Olefinhomo- und -copolymeren sowie Styren/Ethylen-Copolymerisate mit hohem Styrenanteil und hohem Molekulargewicht und auch - analog syndiotaktischen Polystyrenen (SPS) - die syndiotaktischen Polypropylene (SPP)

(J. Wolters, Kunststoffe 83(1993)12, S. 985-987).

Eine weitere Gruppe verwendbarer Rückgratpolymerer sind die im Unterschied zu den amorphen POPs und POEs auf dem Markt befindlichen teilkristallinen thermoplastischen Blockcopolymeren, die aus kristallinen (harten) PO-Blöcken, zumeist PE-Blöcken mit Schmelztemperaturen von etwa 95 bis 110°C, sowie amorphen (weichen) PO-Blöcken mit Glasumwandlungstemperaturen zwischen -40 und -60 °C bestehen.

Letztlich können auch chlorierte Polyethylene (PE-C, CM) und chlorsulfonierte Polyethylen-Kautschuke (CSM) als Rückgratpolymere bzw. Rückgratpolymerkomponenten verwendet werden.

Generell sind als Rückgratmaterialien Compounds, bestehend aus mindestens zwei verschiedenen olefinischen Thermoplasten und/oder (vernetzten oder unvernetzten) Elastomeren, gegebenenfalls unter Zusatz eines faserigen oder besonders teilchenförmigen Füllstoffs aus der Reihe der bekannten Sortimente in den üblichen Konzentrationen von ca. 5 bis 100 Masseteilen, vorzugsweise von 10 bis 50 Masseteilen, bezogen auf jeweils 100 Masseteile polymeres Rückgratmaterial, einsetzbar.

Eine bevorzugte Stellung als verwendbare Rückgratmaterialien nehmen die olefinischen/vinylaromatischen Blockcopolymeren ein. Sie werden durch selektive Hydrierung (GB 1030306, US 3700633) von unterschiedlich strukturierten (linearen und radialen) Blockcopolymeren aus monovinylsubstituierten aromatischen Kohlenwasserstoffsegmenten (Polyvinylarylblöcken), vorzugsweise aus Styren bzw. alkylierten und/oder halogenierten Styrenen aufgebauten Blöcken (S), und konjugierten Dien-Segmenten, vorzugsweise aus Butadien-(1,3) oder Methylbutadien-(1,3) (Isopren) aufgebauten Blöcken (B oder I), wobei die unterschiedlichen Blöcke scharf voneinander getrennt sein oder "verschmierte" Übergänge (tapered section) aufweisen können, mit olefinischen Unsättigungsgraden von im allgemeinen ≤ 20 %, vorzugsweise ≤ 5 %, erhalten.

Besonders geeignet sind die durch selektive Hydrierung von Styren/Butadien/Styren-Dreiblockcopolymeren (SBS), deren Butadienmittelblock einen Vinylgruppengehalt zwischen 10 und 80 %, vorzugsweise zwischen 25 und 65 %, aufweist, erhaltenen Styren/Ethylen-Butylen/Styren-Dreiblockcopolymeren (SEBS) sowie die entsprechenden aus den Styren/Isopren/Styren-Dreiblockcopolymeren erhaltenen Styren/Ethylen-Propylen/Styren-Dreiblockcopolymeren (SEPS) mit gewichtsmittleren Molekulargewichten $\overline{M}$w zwischen 20.000 und 1.000.000.

Aufgrund des thermodynamisch unverträglichen Phasenverhaltens zwischen den harten schmelzbaren Vinylarylblöcken und den weichen elastischen Polydien- bzw. Polyolefinblöcken stellen diese Drei- und gegebenenfalls Mehrblockcopolymeren typische TPE (als polystyrenhaltige TPE codiert TPE-S) dar.
Zur Gruppe der TPE-S, die in Form von Rückgratpolymer-Compounds besonders günstig eingesetzt werden können, zählen vor allem SEBS/PO- bzw. SEPS/PO-Blends, wobei als PO-Komponente vorzugsweise PP, PE-LD, PE-LLD und EPM gut geeignet sind und die Compounds gegebenenfalls zusätzlich einen Füllstoffanteil zwecks Einstellung bestimmter Härten bei gleichzeitiger Erreichung einer Kostenabsenkung enthalten können.
Die morphologische Grundcharakteristik der TPE-S wird durch die genannten polymeren und/oder anorganischen Zusätze nicht oder nur unbedeutend verändert.

Generell können als Füllstoff faserige und besonders teilchenförmige Füllstoffe in einer Menge bis ca. 70 Masse-%, vorzugsweise zwischen 5 und 50 Masse-%, hinzugefügt werden, wobei außer den bevorzugten kugelförmigen Calciumcarbonaten, insbesondere Kreiden, gegebenenfalls auch plättchenförmige Kalium-Aluminium-Silikate, wie z.B. Glimmer, Feldspat und Kaolin, oder Magnesium-Silikate, wie z.B. Talkum, sowie nadelförmige Calcium-Silikate, wie z.B. Wollastonite, einsetzbar sind.

Außer den genannten olefinischen Rückgratpolymeren können auch ungesättigte, im wesentlichen auf einpolymerisierte Dieneinheiten basierende Rückgratpolymere, teilweise schon unter den Olefincopolymeren mit angeführt, für die Herstellung von erfindungsgemäßen funktionalisierten Polymeren verwendet werden, insbesondere Olefinterpolymere, wie z.B. unvernetztes EPDM, und Styren/konjugierte Diendreiblockcopolymere (SBS, SIS) sowie auch die entsprechenden Zweiblockcopolymeren (SB, SI) und Mehrfachblockcopolymeren, mit unterschiedlicher Struktur, symmetrisch oder unsymmetrisch, linear und sternförmig verzweigt (radial) aufgebaut (GB 985614, DE 2125344, DE 1959922, US 3281383), wobei die Blockcopolymeren ausschließlich scharfe Übergänge zwischen den Segmenten aufweisen oder auch "verschmierte", d.h. im wesentlichen statistische Copolymersegmente (tapered section) enthalten können (DE 2550226, DE 2550227, GB 888624, GB 1044862, NL 6713383).

Der Vinylgruppengehalt der aus dem konjugierten Dien gebildeten Segmenteinheit kann 10 bis 80 %, vorzugsweise 25 bis 65 %, betragen.
Das gewichtsmittlere Molekulargewicht $\overline{M}$w der Styren/Dien-Blockcopolymeren liegt zwischen 20.000 und 1.000.000, vorzugsweise zwischen 50.000 und 500.000.
Dabei kann jeder PS-Block S das gleiche oder ein unterschiedliches zahlenmittleres Molekulargewicht $\overline{M}$n von 4.000 bis 100.000 und jeder Polydienblock B oder I ein $\overline{M}$n zwischen 10.000 und 200.000 besitzen.

Als Rückgratpolymere können weiterhin Polydiene und statistische Dienelastomere, insbesondere die handelsüblichen Butadienkautschuke (BR), Naturkautschuke (NR), Isoprenkautschuke (IR), Butylkautschuke (IIR), Styren/Butadien-Kautschuke (SBR), Acrylnitril/Butadien-Kautschuke (NBR), Chloroprenkautschuke (CR) und dgl., einschließlich die entsprechenden hydrierten Kautschuke (H-BR, H-NBR usw.), verwendet werden.

Darüber hinaus sind die durch Pfropfen von olefinischen und/oder vinylgruppenhaltigen Monomeren, insbesondere Styrenen, (Meth-)Acrylnitril und (Meth-)Acrylaten, auf Dienkautschuke sowie Olefin- bzw. Acrylatkautschuke erhaltenen Copfropfpolymerprodukte, wie besonders solche entsprechend der Monomerkombinationen Acrylnitril/ Butadien/Styren   (ABS),   Methylmethacrylat/Butadien/Styren   (MBS),   Methylmethacrylat/Acrylnitril/Butadien/Styren (MABS) und Acrylat/Styren/Acrylnitril (ASA), als erfindungsgemäß einsetzbare Rückgratpolymere geeignet.
Die als Rückgratpolymerisate verwendeten Thermoplaste und Elastomeren, insbesondere TPE, werden pfropffunktionalisiert unter Verwendung nachfolgender bevorzugter Funktionsmonomerer:

1.) die mindestens über eine Mono- oder Dicarboxylgruppe oder eine davon abgeleitete Gruppe (entsprechende Derivate), insbesondere eine Anhydridgruppe, verfügen, wobei stellvertretend für diese Verbindungsklasse Acrylsäure (AS), Methacrylsäure (MAS), Fumarsäure (FS) und Maleinsäureanhydrid (MSA) sowie die entsprechenden höhermolekularen Homologen zu nennen sind,

2.) die mindestens über eine Epoxy- oder Hydroxygruppe verfügen, wobei stellvertretend für diese Verbindungsklasse Glycidylmethacrylat (GMA), Hydroxyethylacrylat (HEA) und Hydroxypropylmethacrylat (HPMA) zu nennen sind,

3.) die mindestens über eine aminische, amidische bzw. imidische Gruppe verfügen (beide letzteren auch als Derivate der o.a. 1. Funktionsmonomerklasse einzuordnen), wobei Acrylamid und z.B. 2-Dimethylaminoethylmethacrylat (DMAEMA) typische Vertreter dieser Verbindungsklasse sind, und

4.) die mindestens über eine silanische Gruppe verfügen, wie z.B. ( y-Methacryloyloxypropyl)-trimethoxysilan und besonders Tris-(2-methoxyethoxy)-vinylsilan als ausgewählte Vertreter dieses Funktionsmonomertyps.

Die Funktionalisierung - im allgemeinen bis zu maximal ca. 33 Masse-% aufgepfropften Funktionsmonomeranteil - ist natürlich auch mit den entsprechend über zwei oder mehr verschiedene polare funktionelle Gruppen verfügenden Monomeren möglich.
Des gleichen können nach erfolgter Pfropf-Funktionalisierung Sekundärreaktionen an bzw. über die aufgepfropften funktionellen Gruppen, wie z.B. eine radikalische oder besonders durch Umsetzung mit metallischen Salzen oder Hydroxiden eine ionische Vernetzungsreaktion (EP 0086159) sowie auch eine Nachfolgereaktion der funktionellen Gruppen mit niedermolekularen Substanzen, die mit den gepfropften polaren Gruppen reagieren können, wie z.B. mit einem N-substituierten Imid-, Amid- oder N-substituierten Hydroxyethylmonomer (EP 0128775) oder mit Bis- oder Tris-Carbodiimiden (US 4.689.372), durchgeführt werden.
Die Funktionmonomeren können allein oder auch als Mischung aus zwei oder mehreren Funktionsmonomeren sowie günstigerweise unter Zusatz eines oder mehrerer, vorzugsweise über keine reaktive funktionelle Gruppen bzw. nur über deutlich schwächere polare Gruppen, wie z.B. Estergruppen, verfügende Comonomeren eingesetzt werden.
Besonders mittels Verwendung von Styrenen als Comonomer, wobei das Masseverhältnis Funktionsmonomer zu Comonomer innerhalb eines sehr weiten Bereiches, vorzugsweise von 90 bis 10 % zu 10 bis 90 %, variierbar ist, können - unabhängig von den anderen wählbaren Pfropfprozeß- und Produktkennwert-Steuergrößen, wie Initiatorart und -konzentration, Verhältnis vorgelegter Monomer- zum Rückgratpolymer-Anteil und nicht zuletzt durch den in weiten Grenzen hinzufügbaren Ölanteil - wichtige anwendungstechnische Eigenschaften der funktionalisierten Polymere maßgeblich beeinflußt werden.
Eine zentrale Rolle für den Pfropfpolymerisationsprozeß sowie das funktionalisierte Pfropfprodukt nimmt das Prozeßöl ein.
Für die erfindungsgemäßen funktionalisierten Thermoplaste und Elastomeren hat sich eine Vielzahl unterschiedlicher Öle, die dem Rückgratpolymeren bzw. -polymercompound (ungefüllte/gefüllte) vor der Pfropffunktionaiisierungsstufe hinzugefügt werden - gegebenenfalls in einer speziellen Vorcompoundierungsstufe - als geeignet erwiesen. Das betrifft in erster Linie die bekannten hochausraffinierten hochsiedenden mineralischen Öle, bevorzugt solche mit paraffinischer und/oder naphthenischer aber auch gegebenenfalls aromatischer Struktur, im allgemeinen unterhalb 300 °C sich nicht zersetzend, klar und geruchlos, ohne toxische Bestandteile (für den Lebensmittelsektor geeignet).
Des weiteren können - unter Berücksichtigung des vorgesehenen speziellen Verwendungszweckes, einschließlich des Einsatzes der funktionalisierten Produkte in den verschiedenen thermoplastischen Formmassen - auch native Öle, wie besonders die bekannten pflanzlichen Öle (Rüböl, Sojaöl usw.), als erfindungsgemäßer Bestandteil im Pfropfpolymerisationsansatz verwendet werden.
Als Initiatoren sind besonders die bekannten organischen Peroxide sowie Diazoverbindungen, einschließlich entsprechende Initiatormischungen, mit einer Zehn-Stunden-Halbwertstemperatur (gemessen in 1,0 m-Benzenlösung) zwischen 40 °C und 90 °C, vorzugsweise die bekannten Diacylperoxide, wie z.B. Dilauroylperoxid (DLPO) und Dibenzoylperoxid (DBPO), Dialkylperoxidicarbonate und Perneodecanoate, geeignet.

Der gesamte Pfropfpolymerisationsansatz, bestehend aus Rückgratpolymer (-compound), Ölanteil, Monomer (en) (Funktionsmonomer und gegebenenfalls Zusatzcomonomer) und radikalischem Initiator, wird bei Raumtemperatur im Reaktor vorgelegt, in dem in einer ersten, im allgemeinen zehnminütigen bis halbstündigen Dispergierphase die Reaktionsmischung, im wesentlichen in einem nahezu trockenen bis "ölfeuchten" pulverigen und/oder krümeligen und/ oder flockigen bzw. schuppen- bis blättchenförmigen und/oder grobkörnigen (granularen) Zustand, in eine pfropfpolymerisationsgünstige Form gebracht wird.

An dieser Stelle ist darauf hinzuweisen, daß zum Zweck der Verbesserung der Dispergierwirkung - ebenso wie für mögliche Vorcompoundierungsstufen (z.B. Mischung des Rückgratpolymerisates, gegebenenfalls unter Zusatz eines Zweitpolymeren und/oder eines Füllstoffs, mit dem Öl,) - in einem Inertwasser-Medium gearbeitet werden kann, wobei der Inertwasseranteil zwischen 20 und 500 Masseteile, bezogen auf 100 Masseteile Feststoff/Öl, wählbar ist.

Prinzipiell ist auch die nachfolgende Stufe, die eigentliche Pfropffunktionalisierung, in Anwesenheit von Inertwasser als Dispergierhilfsmedium und/oder zusätzliches Wärmeübertragungs- und Wärmeabführungsmedium (unter Berücksichtigung der spezifischen Reaktorausführung, einschließlich der Rührvorrichtung) durchführbar, ohne daß sich grundsätzlich am Pfropfprozeß etwas ändert.

In der zweiten Phase, der Reaktionsphase, wird unter Einhaltung eines von den Reaktionskomponenten abhängigen Temperatur-Zeit-Regimes sowie der festgelegten Reaktionsendtemperatur, mit der auch der jeweils ausgewählte radikalische Initiator korrespondiert, im allgemeinen über einen Zeitraum zwischen 1 und 10 Stunden, vorzugsweise zwischen 2 und 5 Stunden, die chemische Pfropfreaktion durchgeführt.

Charakteristisches Merkmal dieser Art der Festphasenpfropfung - ohne den zuvor erwähnten möglichen Inertwasserzusatz - ist die Aufrechterhaltung der trockenen bis gegebenenfalls ölfeuchten Konsistenz des Reaktionsmediums.

Als technologisch sowie produktspezifisch besonders vorteilhaft haben sich Funktionalisierungsgrade, die bei Verwendung von 0,2 bis 10 Masseteilen AS und/oder MAS und/oder MSA oder auch GMA bzw. HPMA als Funktionsmonomere, bezogen auf 100 Masseteile Rückgratmaterial, sowie von Pfropfmonomermischungen aus den entsprechenden Funktionsmonomeren und einem unpolaren bzw. weniger reaktive polare Gruppen besitzenden Comonomeren, vorzugsweise Styren und/oder $\alpha$-Methylstyren und/oder einem Alkyl(meth)acrylat mit einem Masseverhältnis Funktions-/Comonomer von 1 bis 5 zu 5 bis 1 erhalten werden, erwiesen.

Die erfindungsgemäßen funktionalisierten Polymeren können aufgrund ihrer hervorragenden adhäsiven Eigenschaften als Beschichtungen auf unterschiedlichen Unterlagen, in Laminaten und dgl. (Adhesivs) eingesetzt werden.

Die Hauptverwendung - und das sowohl aus wirtschaftlichen Gründen als auch wegen ihrer besonders hohen Wirksamkeit - ist aber die als Schlagzähmodifikatoren für eine Vielzahl von Thermoplasten, insbesondere für eine Reihe der wichtigsten technischen und Hochleistungskunststoffe.

Ausführungsbeispiel

Herstellung der funktionalisierten Polymeren

In einem temperierbaren und mit einer Rührvorrichtung ausgerüsteten, sauerstofffrei gespülten Reaktor werden 100 Masseteile eines Polymerisates bzw. Polymercompounds aus der Reihe der in Tabelle 1 zusammengefaßten Rückgratpolymeren, die jeweils einen bestimmten, gleichfalls in Tabelle 1 angegebenen Anteil eines Prozeßöls (Ölkennwerte in Tabelle 2) enthalten, vorgelegt. Bei Raumtemperatur wird das Monomer bzw. Monomergemisch (Funktionsmonomer und Zusatz-Comonomer) entsprechend den in Tabelle 3 aufgeführten Spezies und Anteilen zusammen mit dem radikalischen Initiator, in den meisten Fällen ein Diacylperoxid für Polymerisationsendtemperaturen Tpm von 70 bis 90 °C, gegebenenfalls für niedrigere Tpm (55 bis 75 °C) auch ein Dialkylperoxidicarbonat oder eine Diazoverbindung, hinzugefügt.

Im einzelnen sind außer den in den Tabellen 1 und 2 angegebenen Rückgratpolymeren und Ölen nachfolgende Einsatzsubstanzen verwendet worden:

Funktionsmonomer

Acrylsäure (AS), Maleinsäureanhydrid (MSA), Hydroxypropylmethacrylat (HPMA), Glycidylmethacrylat (GMA), 2-Dimethylaminoethylmethacrylat (DMAEMA) und Tris-(2-methoxyethoxy)-vinylsilan (V-Silan)

Zusatz-Comonomere

Styren (S), α-Methylstyren (MS) und Ethylacrylat (EA)

Initiatoren

Überwiegend Dibenzoylperoxid und Dilauroylperoxid in Konzentrationen zwischen 0,1 und 3 %, vorzugsweise zwischen 0,2 und 1,5 %, bezogen auf die Rückgratpolymermasse, in einigen Fällen auch Dicetylperoxidicarbonat oder 2,2-Azo-bis(isobutyronitril) innerhalb des genannten Konzentrationsbereiches.

Füllstoff

Kreide (gecoatet) mit einem mittleren Teilchendurchmesser von 2,5 µm (im Rückgratpolymercompound enthalten) (s. Tabelle 1).

Nach etwa 30-minütiger Mischung der Einsatzsubstanzen (Dispergierphase) erfolgt entsprechend einem von den Einzelkonzentrationen des Pfropfpolymerisationsansatzes abhängigen, im allgemeinen über 2 bis 5 Stunden fixierten Temperatur-Zeit-Programms die Funktionalisierung des Rückgratpolymeren (Reaktionsphase). Die Reaktion wird nach Erreichen eines Monomerumsatzes, der in Abhängigkeit vom jeweiligen Pfropfsystem zwischen 50 und nahezu 100 % liegt beendet, indem der Reaktor abgekühlt, mit Stickstoff gespült (gegebenenfalls separate Rückgewinnung von nicht umgesetzten und ausgetriebenen Restmonomeren) und entleert wird.
Die zumeist monomerfrei erhaltenen Pfropfprodukte werden direkt analytisch charakterisiert (s. Tabelle 3).
Bestimmt werden:

- Funktionalisierungsgrad FG (prozentualer Massenanteil an aufpolymerisiertem Funktionsmonomer, bezogen auf die gesamte Pfropfproduktpolymermasse), ermittelt durch Rücktitration mit 0,1-molarer HCl der durch den Carbonsäureanteil (AS, MSA) nicht neutralisierten 0,1-molaren Kalilauge bzw. durch Elementaranalyse des Sauerstoffes (Kontrollbestimmung AS und MSA sowie ausschließlich für HPMA und GMA), des Stickstoffs (für DMAEMA) und des Siliciums (für V-Silan);

- Gelgehalt $m_{Gel}$ als Maß für den Vernetzungsgrad, d.h. den in siedendem Xylol ermittelten und in Masse-% angegebenen unlöslichen Anteil des funktionalisierten Polymers.

In Tabelle 3 sind die aus Tabelle 1 entnommenen Rückgrat-Systeme (Rückgratpolymer bzw. -polymercompound/Ölzusatz) mit den in Spalte 1 der Tabelle 1 angegebenen Lfd. Nr. (1 bis 70) aufgeführt.
Darüber hinaus sind einige repräsentative Vergleichs-Produkte (Vgl. Nr. /Spalte 1 der Tabelle 3) angegeben, die den jeweils gleichen Produkt-Nr. - allerdings hergestellt ohne Ölzusatz - entsprechen. Zusätzlich ist noch angegeben, nach welcher Technologie die Vergleichsprodukte - entweder mittels analoger Festphasenpfropfung ohne Öl (FP) oder mittels Schmelzepfropfung (SP, 190 - 210 °C/ Doppelschneckenextruder) - erhalten worden sind. Wesentliches Charakterisierungsmerkmal der Pfropfprodukte ist ihr Funktionalisierungsgrad (FG).
Nach Abtrennung der aus den Funktionsmonomeren gebildeten Homopolymerisat- bzw. aus Funktions-/ Comonomer-Mischungen gebildeten Copolymer-Anteile durch fraktionierte Fällung können die Pfropfausbeute als das Verhältnis der Masse an gepfropftem Funktionsmonomer zur gesamten polymerisierten Funktionsmonomermasse bzw. der Pfropfungsgrad als die auf die vorgelegte Rückgratpolymermasse bezogene gepfropfte Funktionsmonomermasse ermittelt werden.
Besonders hohe Pfropfausbeuten (≥90 %) werden für die olefinischen Rückgratpolymere, insbesondere PE-LD, EPM, EVA, SEBS, SEPS bzw. SEPS/PO-Compounds, erhalten, die entsprechend erfindungsgemäßer Pfropfrezeptur (Ölanteil, Art und Konzentration der Monomeren und des Initiators) zu funktionalisierten Polymeren mit hochwirksamen Modifikatoreigenschaften führen.
Anhand des als zweiten wichtigen Kennwert in Tabelle 3 angegebenen Gelgehalts ist zu sehen, daß bei entsprechender Wahl der aus Pfropfrückgrat/Öl und Funktionsmonomer/ Zusatz-Comonomer bestehenden Pfropfsysteme gelfreie ($m_{Gel}$ ≤ 5 %) bzw. gelarme funktionalisierte Pfropfprodukte ($m_{Gel}$ ≤ 20 %) erhalten werden (Ausnahme hierbei nur PE-LD-Rückgrate). Andererseits sind aber auch gezielt hoch-gelhaltige funktionalisierte Polymere herstellbar.
In diesem Zusammenhang ist noch einmal auf einen schon genannten Vorteil der erfindungsgemäßen Pfropftechnologie und den damit erhaltenen funktionalisierten Polymeren hinzuweisen, und zwar, daß besonders hochmolekulare Rückgrate ($\overline{M}w$ > 200.000), wie z.B. die für vorliegende Erfindung technisch interessanten Styren/Olefin/ Styren-Dreiblockcopolymeren (s. besonders das verwendete SEPS bzw. die entsprechenden SEPS-Compounds als Rückgrat), die durch den Ölzusatz und anschließend durch Anwendung der Festphasenpfropftechnologie überhaupt erst in eine vernüftige pfropffähige Form gebracht und ohne jegliche technisch-technologischen Schwierigkeiten funktionalisiert werden können (u.a. keinerlei Reaktorinnenwand-Produktansätze/Pfropfprodukte mit einer sehr einheitlichen Teilchenform).

Des weiteren offenbart die erfindungsgemäße Technologie weitere Vorzüge, die u.a. auch in den Einzelbeispielen in Tabelle 3 berücksichtigt wurden.

So werden besonders bei Verwendung von MSA als Funktionsmonomer, ohne daß ein Zusatz-Comonomer im Überschuß vorliegt, aufgrund des Ölanteils deutlich höhere Pfropfausbeuten (ca. 70 - 80 % gegenüber 50 bis maximal 60 % ohne Öl im Pfropfansatz) erhalten. Analog bewirkt der erfindungsgemäße Ölanteil - im Unterschied zum Zusatz von Öl in gleicher Konzentration nach erfolgter Pfropffunktionalisierung - eine Absenkung des Gelgehaltes $m_{Gel}$, die ansonsten durch Erhöhung des Zusatz-Comonomeranteiles, insbesondere in Form eines erheblichen Styren-Überschusses, erreicht wird.

Höhere Styrenanteile wiederum führen generell zu einer geringeren Rückgrat-Funktionalität und somit einer geringeren Haftwirkung (Adhäsivität) bzw. eingeschränkter Modifikatorwirksamkeit besonders in Formmassen (Blends, Composites) auf Basis polarer Thermoplaste.

Andererseits aber erlaubt die erfindungsgemäße Technologie die Funktionalisierung mit sehr deutlichem Überschuß an Zusatz-Comonomeren, insbesondere von Styren, zwecks Herstellung von nur sehr gering bzw. im Grenzfall von nicht funktionalisierten, styrengepfropften olefinischen und/oder dienischen Rückgratpolymeren.

Die auf diese Weise gewonnenen Pfropfpolymerprodukte, die praktisch eine Pfropf-PS-Block-Struktur aufweisen, sind u.a. besonders für die Modifizierung von Blends auf Basis PS/PO und gegebenenfalls anderen Thermoplasten geeignet.

## Herstellung der ionisch vernetzten funktionalisierten Polymeren

Die Neutralisation und damit die ionische Vernetzung einiger in Tabelle 3 aufgeführter carboxylierter Polymerer bzw. Polymercompounds wurde mittels üblicher Extrusionstechnologie (s. hierzu auch US 3.969.434) unter Verwendung einer Salzkombination aus ZnO, Zn-Acetat und Zn-Stearat (in Form eines zuvor aus 50 Masse-% carboxyliertes Polymer und 50 Masse-% Salzkombination hergestellten Konzentrates) entsprechend einer Zn-Kationen-Konzentration, die einen Neutralisationsgrad der aufgepfropften Acrylsäure zwischen 30 und 80 Mol-% gestattete, in einem Brabender-Plastographen durchgeführt (s. Angaben in Tabelle 4).

Analog wurde die ionische Vernetzungsreaktion mittels KOH durchgeführt (s. auch US 4.308.353).

Unter Verwendung eines 43 mm-Doppelschneckenextruders (L = 38 D) mit Entgasungszone wurde ein ausgewähltes carboxyliertes TPE mittels $Mg(OH)_2$ ionisch vernetzt (s. auch US 4.666.988, US 4.774.290).

In Tabelle 4 sind die auf diese Weise erhaltenen ionisch vernetzten funktionalisierten Polymeren, einschließlich zwei ohne Öl im Pfropf-Funktionalisierungs-Ansatz hergestellten Vergleichs-Ionomeren, aufgeführt.

Tabelle 1

| Lfd.Nr. (Rück-grat-Nr.) | Rückgratpolymer / Rückgratcompound | Rückgrat-Charakteris. Zus. (Ma-%) | Rückgrat-Kennwerte | | | Zusatz v. Öl (Ma-Tle. auf 100 Ma-Tle. Rückgrat) |
| | | | Molgewicht $\overline{M}w$ | Dichte $(g/cm^3)$ | Einsatz-form | |
|---|---|---|---|---|---|---|
| 1 2 | PE-HD | Ethylen(E)/3% Butylen(B) | 51.000 | 0,956 | Pulver | Min.-Öl I 20 50 Min.-Öl I |
| 3 4 5 | PE-HD | E | 147.000 | 0,952 | Granulat | 20 Min.-Öl II 50 Min.-Öl I 20 Pfl.-Öl IV |
| 6 7 | PE-LLD | E | 81.000 | 0,933 | Granulat | 20 Min.-Öl I 40 Min.-Öl II |
| 8 9 10 | PE-LD | E | 33.000 | 0,918 | Pulver | 20 Min.-Öl I 50 Min.-Öl I 50 Pfl.-Öl IV |
| 11 12 | PP | Propylen(P) | 190.000 | 0,910 | Pulver | 20 Min.-Öl III 50 Min.-Öl I |
| 13 14 15 | PP | P | 159.000 | 0,912 | Flocken | 20 Min.-Öl II 50 Min.-Öl I 20 Pfl.-Öl IV |
| 16 17 | PP | P | 161.000 | 0,910 | Granulat | 20 Min.-Öl I 40 Min.-Öl I |
| 18 19 20 | EPM | 67% E/ 33% P | 138.000 | 0,862 | Granulat | 30 Min.-Öl I 50 Min.-Öl I 30 Pfl.-Öl IV |

EP 0 805 827 B1

Tabelle 1, Seite 2

| Lfd.Nr. (Rück-grat-Nr.) | Rückgratpolymer / Rückgratcompound | Rückgrat-Charakteris. Zus. (Ma-%) | Rückgrat-Kennwerte | | | Zusatz v. Öl (Ma-Tle. auf 100 Ma-Tle. Rückgrat) |
| --- | --- | --- | --- | --- | --- | --- |
| | | | Molgewicht $\bar{M}w$ | Dichte $(g/m^3)$ | Einsatz-form | |
| 21 | EPM/PP/ | 63 % EPM/ | | 0,885 | Granulat | 30 Min.-Öl III |
| 22 | PE-HD | 27 % PP/10 % PE | | | | 50 Min.-Öl I |
| 23 | EVA | E/14 % Vinyl-acetat | 151.000 | 0,934 | Pulver | 30 Min.-Öl I |
| 24 | | | | | | 50 Min.-Öl I |
| 25 | POE | E/25 % 1-Octen | $Tm^{2)}$: 76/80 °C | 0,872 | Granulat | 20 Min.-Öl I |
| 26 | SEBS | 29 % PS/38 % E- 33 % B | 81.000 | 0,910 | Krümel | 120 Min.-Öl I |
| 27 | | | | | | 150 Min.-Öl I |
| 28 | | | | | | 60 Pfl.-Öl IV |
| 29 | SEBS/EVA | 70 % SEBS/ 30 % EVA | | 0,921 | Pulver | 60 Min.-Öl I |
| 30 | | | | | | 120 Min.-Öl III |
| 31 | SEPS* | 11 % PS/46 % E- 43 % P | 66.000 | 0,890 | Granulat | 60 Min.-Öl I |
| 32 | | | | | | 120 Min.-Öl I |
| 33 | SEPS | 30 % PS/38 % E- 32 % P | 280.000 | 0,920 | Krümel | 60 Min.-Öl I |
| 34 | | | | | | 120 Min.-Öl I |
| 35 | | | | | | 150 Min.-Öl I |
| 36 | | | | | | 180 Min.-Öl I |
| 37 | SEPS | 30 % PS/38 % E- 32 % P | 280.000 | 0,920 | Granulat | 60 Min.-Öl II |
| 38 | | | | | | 120 Min.-Öl III |
| 39 | | | | | | 50 Pfl.-Öl IV |
| 40 | | | | | | 100 Pfl.-Öl IV |

EP 0 805 827 B1

Tabelle 1, Seite 3

| Lfd.Nr. (Rück-grat-Nr.) | Rückgratpolymer / Rückgratcompound | Rückgrat-Charakteris. Zus. (Ma-%) | Rückgrat-Kennwerte Molgewicht $\overline{M}w$ | Dichte $(g/cm^3)$ | Einsatz-form | Zusatz v. Öl (Ma-Tle. auf 100 Ma-Tle. Rückgrat) |
|---|---|---|---|---|---|---|
| 41 | SEPS/PE-LD | 40% PE-LD | | | Granulat | 60 Min.-Öl I |
| 42 | | | | | | 60 Pfl.-Öl IV |
| 43 | SEPS/PP | 33% PP | | | Granulat | 100 Min.-Öl I |
| 44 | | | | | | 100 Min.-Öl III |
| 45 | SEPS/PP | 20% PP | | | Granulat | 100 Min.-Öl I |
| 46 | | | | | | 100 Min.-Öl II |
| 47 | | | | | | 100 Pfl.-Öl IV |
| 48 | SEPS/PP | 15% PP | | | Granulat | 110 Min.-Öl I |
| 49 | | | | | | 110 Min.-Öl II |
| 50 | | | | | | 110 Pfl.-Öl IV |
| 51 | SEPS/PP/Kreide | 55% SEPS/10% PP/ 35% Kreide | | | Granulat | 35 Min.-Öl I |
| 52 | | | | | | 25 Pfl.-Öl IV |
| 53 | SEPS/EPM | 25 % EPM | | | Granulat | 100 Min.-Öl I |
| 54 | | | | | | 60 Pfl.-Öl IV |
| 55 | SEPS/POE | 25 % POE | | | Granulat | 100 Min.-Öl I |
| 56 | EPDM | E/P=65/35, 8% Norb [1) | 130.000 | 0,882 | Granulat | 50 Min.-Öl I |
| 57 | EPDM/PP | 30% PP | | | Granulat | 50 Min.-Öl II |

EP 0 805 827 B1

Tabelle 1, Seite 4

| Lfd.Nr. (Rückgrat-Nr.) | Rückgratpolymer / Rückgratcompound | Rückgrat-Charakteris. Zus. (Ma-%) | Rückgrat-Kennwerte | | | Zusatz v. Öl (Ma-Tle. auf 100 Ma-Tle. Rückgrat) |
|---|---|---|---|---|---|---|
| | | | Molgewicht $\bar{M}w$ | Dichte $(g/cm^3)$ | Einsatz-form | |
| 58 59 | SBS | 29% PS/71% PB | 120.000 | 0,941 | Granulat | 80 Min.-Öl I 80 Pfl.-Öl IV |
| 60 61 62 | $(SB)_n$ (radial) | 20% PS/80% PB | 180.000 | 0,930 | Krümel | 20 Min.-Öl I 40 Min.-Öl I 100 Min.-Öl I |
| 63 64 65 | $(SB)_n$ (radial) | 30% PS/70% PB | 160.000 | 0,939 | Krümel | 20 Min.-Öl III 40 Min.-Öl II 100 Min.-Öl I |
| 66 67 68 | $(SB)_n$ (radial) | 38% PS/62% PB | 125.000 | 0,960 | Krümel | 45 Min.-Öl I 45 Min.-Öl II 45 Min.-Öl III |
| 69 70 | SBR | 30% Styren/ 70% Butadien | 85.000 | 0,930 | Krümel | 60 Min.-Öl I 60 Min.-Öl III |

1) Norb.: 5-Ethyliden-2-norbornen

2) Tm : Schmelztemperatur

EP 0 805 827 B1

Tabelle 2: Verwendete Prozeßöle (im Pfropfpolymerisationsansatz enthalten) und ihre Kennwerte (bei Raumtemperatur)

EP 0 805 827 B1

| Öl-Typ | Dichte $(g/cm^3)$ (DIN 51757) | Brechungszahl $n_D$ (DIN 51432) | Dynamische Viskosität $(Pa \cdot s)$ (DIN 51562) | Kohlenstoffverteilung (Ma-%) (DIN 51378) bzw. Zusammensetzung (Ma-%) | | |
|---|---|---|---|---|---|---|
| | | | | $C_{Arom}$ | $C_{Naphth.}$ | $C_{Paraffin}$ |
| Mineralöl I | 0,865 | 1,476 | 0,28 | 0 | 32 | 68 |
| Mineralöl II | 0,880 | 1,485 | 0,36 | 6 | 37 | 57 |
| Mineralöl III (Min.-Öl) | 0,939 | 1,521 | 0,43 | 20 | 31 | 49 |
| Rüböl IV (Pfl.Öl) | 0,917 | 1,473 | 0,60 | Anteil gesättigte Fettsäuren 7 $C_{16}$- bis $C_{22}$-Fetts. Anteil ungesättigte Fettsäuren 59 Ölsäure 21 Linolsäure 9,5 Linolensäure 2,5 Gadolinsäure 1,0 Erucasäure | | |

Tabelle 3:  Herstellung der funktionalisierten Polymeren (verwendete Pfropfsysteme, Charakterisierung der Pfropfprodukte)

| Lfd.Nr. (Produkt-Nr.) | Rückgrat/Öl-System (Angabe: Lfd.Nr. Tab.1) | | Monomerzugabe in Ma.-Tln.auf 100 Ma.-Tle. Rückgrat (Feststoff) | | | | | Kennwerte | |
|---|---|---|---|---|---|---|---|---|---|
| | | | Funktionsmonomere | | | Zusatzcomon. | | FG (Ma.-%) | $m_{Gel}$ (Ma.-%) |
| | | | AS | MSA | andere | S | andere | | |
| 1 | PE-HD | 1 | 2,5 | | | | | 2,1 | 2 |
| 2 | | 2 | | 2,5 | | | | 1,9 | 1 |
| 3 | | 2 | | 2,5 | | 2,5 | | 2,1 | 4 |
| 4 | | 2 | 5 | | | | | 4,2 | 6 |
| 5 | | 2 | 5 | | | 5 | | 4,6 | 20 |
| 6 | | 3 | | 2,5 | | | | 1,7 | 28 |
| 7 | | 4 | | 2,5 | | | | 1,9 | 11 |
| 8 | | 4 | 5 | | | | | 3,8 | 23 |
| 9 | | 4 | 5 | | | 5 | | 4,0 | 39 |
| Vgl.9 | PE-HD (FP) | | 5 | | | 5 | | 2,6 | 55 |
| 10 | PE-HD | 5 | 5 | | | 5 | | 1,5 | 9 |
| 11 | PE-LLD | 6 | | 2,5 | | | | 1,3 | 2 |
| 12 | | 6 | | 2,5 | | 2,5 | | 1,4 | 3 |
| 13 | | 6 | 5 | | | | | 3,4 | 6 |
| 14 | | 6 | 5 | | | 5 | | 2,2 | 17 |
| 15 | | 7 | | 1,5 | | | | 0,8 | 4 |
| 16 | | 7 | | 2,5 | | | | 1,6 | 11 |
| 17 | PE-LD | 8 | 5 | | | 5 | | 4,6 | 49 |
| 18 | | 9 | | 2,5 | | | | 1,8 | 47 |
| 19 | | 9 | | 2,5 | | 2,5 | | 2,2 | 51 |
| 20 | | 9 | 5 | | | | | 4,1 | 47 |
| 21 | | 9 | 5 | | | 5 | | 4,3 | 43 |
| 22 | | 10 | 5 | | | 5 | | 0,9 | 3 |

Tabelle 3, Seite 2

| Lfd.Nr. (Produkt-Nr.) | Rückgrat/Öl-System (Angabe: Lfd.Nr. Tab.1) | | Monomerzugabe in Ma.-Tln.auf 100 Ma.-Tle. Rückgrat (Feststoff) Funktionsmonomere | | | Zusatzcomon. | | Kennwerte FG (Ma.-%) | $m_{Gel}$ (Ma.-%) |
|---|---|---|---|---|---|---|---|---|---|
| | | | AS | MSA | andere | S | andere | | |
| 23 | PP | 11 | 6 | | | | 4 | 4,7 | 29 |
| 24 | | 12 | 5 | | | | | 4,1 | '13 |
| 25 | | 12 | 5 | | | 5 | | 4,2 | 20 |
| 26 | | 12 | | 2,5 | | | | 1,7 | 1 |
| 27 | | 12 | | 2,5 | | | 2,5 | 2,1 | 3 |
| 28 | | 13 | 5 | | | | | 4,5 | 15 |
| 29 | | 13 | 5 | | | 5 | | 4,0 | 21 |
| 30 | | 13 | | 2,5 | | | | 1,5 | 1 |
| 31 | | 13 | | 2,5 | | | 2,5 | 2,3 | 5 |
| 32 | | 13 | 0,5 | | | | 30 | 0,2 | 3 |
| 33 | | 14 | 5 | | | | | 4,2 | 15 |
| Vgl.33 | PP (FP) | | 5 | | | | | 2,9 | 41 |
| 34 | PP | 14 | 5 | | | 5 | | 4,0 | 18 |
| 35 | | 14 | | | 2,5 HPMA | 5 | | 2,1 | 3 |
| 36 | | 15 | 5 | | | | | 1,5 | 25 |
| 37 | | 16 | 5 | | | | | 3,1 | 74 |
| 38 | | 16 | 5 | | | 5 | | 2,8 | 53 |
| 39 | | 16 | | 2,5 | | | | 1,2 | 2 |
| 40 | | 16 | | 2,5 | | | 2,5 | 1,2 | 4 |
| 41 | | 17 | | | 5 GMA | | | 3,7 | 11 |
| 42 | EPM | 18 | 2,5 | | | 7,5 | | 2,3 | 1 |
| 43 | | 19 | 5 | | | | | 4,2 | 46 |
| Vgl.43 | EPM (FP) | | 5 | | | | | 3,2 | 62 |
| 44 | EPM | 19 | 5 | | | 5 | | 4,0 | 2 |
| 45 | | 19 | | 2,5 | | | | 1,6 | 3 |
| 46 | | 19 | | 2,5 | | | 2,5 | 2,0 | 16 |
| 47 | | 20 | 2,5 | | | | | 1,1 | 33 |

EP 0 805 827 B1

Tabelle 3, Seite 3

| Lfd.Nr. (Produkt-Nr.) | Rückgrat/Öl-System (Angabe: Lfd.Nr. Tab.1) | Funktionsmonomere AS | MSA | andere | Zusatzcomon. S | andere | FG (Ma.-%) | $m_{Gel}$ (Ma.-%) |
|---|---|---|---|---|---|---|---|---|
| 48 | EPM/PP/PE 21 | 5 | | | | | 4,0 | 51 |
| 49 | 21 | 5 | | | 15 | | 4,3 | 1 |
| 50 | 22 | | 2,5 | | | | 1,5 | 4 |
| 51 | 22 | | 2,5 | | 2,5 | | 1,8 | 15 |
| 52 | EVA 23 | 2,5 | | | | | 2,35 | 11 |
| Vgl.52 | EVA(SP/190°C) | 2,5 | | | | | 1,2 | 45 |
| 53 | 23 | 0,5 | | | 30 | | 0,3 | 1 |
| 54 | 23 | 5 | | | 5 | | 4,4 | 3 |
| Vgl.54 | EVA (FP) | 5 | | | 5 | | 4,0 | 9 |
| 55 | EVA 24 | 10 | | | | | 7,3 | 31 |
| 56 | 24 | 10 | | | 10 | | 7,7 | 7 |
| 57 | 24 | | 2,5 | | | | 1,8 | 4 |
| 58 | 24 | | 2,5 | | 2,5 | | 2,4 | 0 |
| 59 | POE 25 | 2,5 | | | 7,5 | | 2,2 | 1 |
| 60 | 25 | 5 | | | | | 3,9 | 43 |
| 61 | 25 | 0,2 | | | 15 | | 0,1 | 1 |
| 62 | SEBS 26 | 2,5 | | | | | 2,0 | 41 |
| 63 | 26 | 2,5 | | | 2,5 | | 2,2 | 6 |
| 64 | 27 | 5 | | | 5 | | 4,4 | 15 |
| Vgl.64 | SEBS (SP/200°C) | 5 | | | 5 | | 2,6 | 21 |
| 65 | SEBS 28 | | 2,5 | | | | 1,2 | 14 |
| 66 | SEBS/EVA 29 | | | 5 GMA | 10 | | 4,1 | 1 |
| 67 | 30 | 5 | | | | 2,5 | 4,1 | 45 |
| 68 | SEPS* 31 | | | 2,5 DMAEMA | | | 1,6 | 5 |
| 69 | 31 | 5 | | | 5 | | 4,2 | 9 |
| Vgl.69 | SEPS* (FP) | 5 | | | 5 | | 3,7 | 8 |

Tabelle 3, Seite 4

| Lfd.Nr. (Produkt-Nr.) | Rückgrat/Öl-System (Angabe: Lfd.Nr. Tab.1) | | Monomerzugabe in Ma.-Tln. auf 100 Ma.-Tle. Rückgrat (Feststoff) Funktionsmonomere | | | Zusatzcomon. | | Kennwerte FG (Ma.-%) | $m_{Gel}$ (Ma.-%) |
|---|---|---|---|---|---|---|---|---|---|
| | | | AS | MSA | andere | S | andere | | |
| 70 | SEPS* | 32 | 5 | | | | | 3,9 | 38 |
| 71 | | 32 | | | | | 3 V-Silan | 2,2 | 2 |
| 72 | | 32 | | 2,5 | | | | 1,9 | ·22 |
| 73 | | 32 | | 2,5 | | 2,5 | | 2,2 | 2 |
| 74 | SEPS | 33 | 5 | | | | | 4,0 | 67 |
| 75 | | 33 | 5 | | | 5 | | 4,6 | 63 |
| Vgl.75 | SEPS (SP/200°C) | | 5 | | | 5 | | 2,1 | 45 |
| 76 | SEPS | 34 | 5 | | | | | 4,1 | 51 |
| 77 | | 34 | 5 | | | 5 | | 4,8 | 13 |
| 78 | | 34 | | 2,5 | | | | 2,3 | 31 |
| 79 | | 34 | | 2,5 | | 2,5 | | 2,4 | 2 |
| 80 | | 34 | | | 5 GMA | 5 | | 4,4 | 0 |
| 81 | | 35 | 5 | | | | | 4,3 | 51 |
| 82 | | 35 | 5 | | | 5 | | 4,9 | 8 |
| 83 | | 35 | | | 5 GMA | | | 4,2 | 3 |
| 84 | | 35 | | | 2,5 DMAEMA | | | 1,8 | 1 |
| 85 | | 36 | 5 | | | | | 4,6 | 39 |
| Vgl.85 | SEPS (FP) | | 5 | | | | | 3,9 | 61 |
| 86 | SEPS | 36 | 5 | | | 5 | | 4,9 | 0 |
| 87 | | 37 | | | 5 HPMA | 5 | | 3,9 | 8 |
| 88 | | 38 | | 2,5 | | 2,5 | | 2,2 | 1 |
| 89 | | 39 | 5 | | | 5 | | 2,4 | 2 |
| 90 | | 40 | 5 | | | 5 | | 1,5 | 1 |
| 91 | SEPS/PE-LD | 41 | 2,5 | | | | 1,25 | 2,1 | 33 |
| 92 | | 41 | 2,5 | | | | 7,5 | 2,3 | 2 |
| 93 | | 42 | 5 | | | | 2,5 | 4,2 | 44 |
| 94 | | 42 | 5 | | | | 15 | 4,6 | 3 |

EP 0 805 827 B1

Tabelle 3, Seite 5

| Lfd.Nr. (Produkt-Nr.) | Rückgrat/Öl-System (Angabe: Lfd.Nr. Tab.1) | Monomerzugabe in Ma.-Tln.auf 100 Ma.-Tle. Rückgrat (Feststoff) | | | | | Kennwerte | |
|---|---|---|---|---|---|---|---|---|
| | | Funktionsmonomere | | | Zusatzcomon. | | FG (Ma.-%) | $m_{Gel}$ (Ma.-%) |
| | | AS | MSA | andere | S | andere | | |
| 95 | SEPS/PP 43 | 5 | | | | | 3,8 | 42 |
| 96 | 43 | 5 | | | 5 | | 4,5 | 19 |
| Vgl.96 | SEPS/PP (FP) | 5 | | | 5 | | 3,6 | 33 |
| 97 | SEPS/PP 43 | 2,5 | | | | 2,5 EA | 2,1 | 21 |
| 98 | 43 | 5 | | | | 5 EA | 4,0 | 36 |
| 99 | 43 | | 2,5 | | | 2,5 MS | 2,4 | 1 |
| 100 | 43 | | | 2,5 DMAEMA | | | 1,6 | 2 |
| 101 | 44 | | | 5 V-Silan | | | 3,8 | 8 |
| 102 | 45 | 5 | | | | | 4,7 | 48 |
| 103 | 45 | 5 | | | 5 | | 4,3 | 20 |
| Vgl.103 | SEPS/PP(SP/200°C) | 5 | | | 5 | | 2,8 | 17 |
| 104 | SEPS/PP 45 | 5 | | | 10 | | 4,4 | 3 |
| 105 | 45 | 5 | | | 15 | | 4,5 | 2 |
| 106 | 45 | | | 5 GMA | | | 4,0 | 6 |
| 107 | SEPS/PP 45 | | | 5 GMA | 5 | | 4,2 | 2 |
| Vgl.107 | SEPS/PP(SP/210°C) | | | 5 GMA | 5 | | 2,2 | 5 |
| 108 | SEPS/PP 45 | | | 2,5 V-Silan | | | 1,9 | 3 |
| 109 | 45 | | | 5 V-Silan | | | 3,8 | 7 |
| Vgl.109 | SEPS/PP (FP) | | | 5 V-Silan | | | 1,7 | 25 |
| 110 | SEPS/PP 46 | | 2,5 | | | | 2,3 | 40 |
| 111 | 46 | | 2,5 | | 2,5 | | 2,45 | 4 |
| 112 | 46 | | 2,5 | | 5 | | 2,45 | 2 |
| 113 | 46 | | 2,5 | | 7,5 | | 2,43 | 2 |
| 114 | 47 | 2,5 | | | 1,25 | | 2,4 | 28 |
| 115 | 47 | 2,5 | | | 7,5 | | 2,4 | 3 |

EP 0 805 827 B1

Tabelle 3, Seite 6

| Lfd.Nr. (Produkt-Nr.) | Rückgrat/Öl-System (Angabe: Lfd.Nr. Tab.1) | Monomerzugabe in Ma.-Tln. auf 100 Ma.-Tle. Rückgrat (Feststoff) Funktionsmonomere | | | Zusatzcomon. | | Kennwerte FG (Ma.-%) | $m_{Gel}$ (Ma.-%) |
|---|---|---|---|---|---|---|---|---|
| | | AS | MSA | andere | S | andere | | |
| 116 | SEPS/PP 48 | 2,5 | | | 1,25 | | 2,4 | 32 |
| Vgl.116 | SEPS/PP(SP/200°C) | 2,5 | | | 1,25 | | 1,7 | 31 |
| 117 | SEPS/PP 48 | 2,5 | | | 2,5 | | 2,2 | 11 |
| 118 | 48 | 2,5 | | | 5 | | 2,45 | · 3 |
| 119 | 48 | 2,5 | | | 7,5 | | 2,45 | 2 |
| 120 | 48 | 5 | | | | | 4,2 | 41 |
| 121 | 48 | 5 | | | 5 | | 4,5 | 36 |
| Vgl.121 | SEPS/PP(FP) | 5 | | | 5 | | 2,7 | 30 |
| 122 | SEPS/PP 48 | 5 | | | 10 | | 4,3 | 11 |
| 123 | 48 | 5 | | | 15 | | 4,4 | 2 |
| 124 | 49 | | 2,5 | | | | 2,3 | 36 |
| 125 | 49 | | 2,5 | | 5 | | 2,4 | 2 |
| 126 | 49 | | | 5 GMA | | | 3,8 | 5 |
| 127 | 49 | | | 2,5 DMAEMA | | | 2,0 | 1 |
| 128 | 50 | 2,5 | | | 2,5 | | 2,4 | 13 |
| 129 | 50 | 5 | | | | 5 EA | 3,9 | 34 |
| 130 | SEPS/PP/Kreide 51 | 2,5 | | | 7,5 | | 2,1 | 4 |
| 131 | 51 | | | 2,5 GMA | | | 2,0 | 8 |
| 132 | 51 | | 2,5 | | 2,5 | | 2,0 | 25 |
| 133 | 51 | 5 | | | 5 | | 4,1 | 42 |
| Vgl.133 | SEPS/PP/Kreide (SP/210°C) | 5 | | | 5 | | 2,6 | 35 |
| 134 | SEPS/PP/Kreide 52 | 5 | | | | | 3,8 | 53 |
| 135 | 52 | | 2,5 | | | | 1,4 | 41 |
| 136 | SEPS/EPM 53 | 2,5 | | | | | 2,4 | 38 |
| 137 | 53 | 5 | | | 10 | | 4,6 | 5 |
| 138 | 53 | | 2,5 | | | | 2,0 | 29 |
| 139 | 54 | | 2,5 | | 2,5 | | 1,3 | 26 |
| 140 | 54 | 2,5 | | | 5 | | 1,8 | 7 |

EP 0 805 827 B1

Tabelle 3, Seite 7

| Lfd.Nr. (Produkt-Nr.) | Rückgrat/Öl-System (Angabe: Lfd.Nr. Tab.1) | | Funktionsmonomere AS | MSA | andere | Zusatzcomon. S | andere | FG (Ma.-%) | $m_{Gel}$ (Ma.-%) |
|---|---|---|---|---|---|---|---|---|---|
| 141 | SEPS/POE | 55 | 2,5 | | | 7,5 | | 2,4 | 1 |
| 142 | | 55 | 5 | | | 5 | | 4,4 | 33 |
| 143 | | 55 | | 2,5 | | 1,25 | | 2,1 | 43 |
| 144 | EPDM | 56 | 5 | | | | | 4,4 | 52 |
| 145 | | 56 | 2,5 | | | 7,5 | | 2,4 | 1 |
| 146 | | 56 | | | 5 HPMA | | | 3,8 | 35 |
| 147 | EPDM/PP | 57 | 2,5 | | | 1,25 | | 2,2 | 41 |
| 148 | | 57 | | 2,5 | | 2,5 | | 2,0 | 21 |
| 149 | | 57 | | | 2,5 GMA | | | 1,9 | 12 |
| 150 | SBS | 58 | 2,5 | | | 2,5 | | 1,4 | 41 |
| 151 | | 58 | 5 | | | | | 3,1 | 65 |
| 152 | | 58 | 5 | | | 5 | | 3,3 | 52 |
| Vgl.152 | SBS (SP/200°C) | | 5 | | | 5 | | 2,7 | 61 |
| 153 | SBS | 59 | | 2 | | | | 1,2 | 50 |
| 154 | | 59 | | 2 | | 2 | | 1,5 | 24 |
| 155 | $(SB)_n$ | 60 | 5 | | | | | 1,7 | 26 |
| 156 | | 60 | 5 | | | 5 | | 1,3 | 3 |
| 157 | | 61 | 5 | | | | | 1,1 | 2 |
| 158 | | 61 | 5 | | | 5 | | 1,5 | 7 |
| 159 | | 62 | 5 | | | | | 1,9 | 47 |
| 160 | $(SB)_n$ | 63 | 5 | | | | | 2,2 | 58 |
| 161 | | 63 | 5 | | | 5 | | 1,9 | 21 |
| 162 | | 64 | 2 | | | | 15 MS | 1,2 | 6 |
| 163 | | 65 | 2 | | | | 7,5 MS | 1,4 | 4 |
| 164 | $(SB)_n$ | 66 | 2 | | | 1 | | 1,2 | 17 |
| 165 | | 66 | 2 | | | 2 | | 1,8 | 52 |
| Vgl.165 | $(SB)_n$ (FP) | | 2 | | | 2 | | 1,2 | 41 |
| 166 | $(SB)_n$ | 67 | 3 | | | | | 2,4 | 67 |
| 167 | | 67 | 3 | | | 1,5 | | 2,0 | 36 |
| 168 | | 68 | 3 | | | 3 | | 2,2 | 42 |
| 169 | SBR | 69 | 2,5 | | | | | 1,3 | 35 |
| 170 | | 70 | 5 | | | 5 | | 2,4 | 48 |

EP 0 805 827 B1

Tabelle 4: Ionische Vernetzung

| Funktionalisiertes Polymer Rückgrat/Öl/ Pfropfmon.-Verh. (Nr.Tabelle 3) | AS- Anteil (Ma-%) | Vernetzungsmittel (VM) (Ma.-Tle.VM pro 100 Ma.-Tle. funktion. Polymer) | Reaktions- temperatur ($^{o}$C) | Bezeichnung des Ionomers |
|---|---|---|---|---|
| 66,7 EPM/33,3 Öl I -g-5 AS/5 S (Prod.-Nr.: 44) | 4,0 AS | 1,0 ZnO/0,08 Zn-Acetat/ 0,004 Zn-Stearat | 210 | Ionomer I |
| 77 EVA/23 Öl I -g-2,5 AS (Prod.-Nr.: 52) | 2,35 AS | 0,6 ZnO/0,05 Zn-Acetat/ 0,0025 Zn-Stearat | 210 | Ionomer II |
| 100 EVA - -g-2,5 AS Prod.-Nr.:Vgl.52) | 1,2 AS | 0,3 ZnO/0,025 Zn-Acetat/ 0,0015 Zn-Stearat | 210 | Vgl.-Ionomer II |
| 40 SEBS/60 Öl I -g-5 AS/5 S. (Prod.-Nr.: 64) | 4,4 AS | 0,5 KOH | 205 | Ionomer III |
| 100 SEBS - -g-5 AS/5 S (Prod.-Nr.:Vgl.64) | 2,6 AS | 0,3 KOH | 205 | Vgl.-IonomerIII |
| 50 SEPS(80%)/ PP(20%)/50 Öl I -g-5 AS/5 S (Prod.-Nr.:103 | 4,3 AS | 1,5 Mg(OH)$_2$ | 220 | Ionomer IV |

EP 0 805 827 B1

Tabelle 4, Seite 2

| Funktionalisiertes Polymer | | Vernetzungsmittel (VM) (Ma.-Tle.VM pro 100 Ma.-Tle. funktion. Polymer) | Reaktions-temperatur ($^o$C) | Bezeichnung des Ionomers |
|---|---|---|---|---|
| Rückgrat/Öl/ Pfropfmon.-Verh. (Nr.Tabelle 3) | AS-Anteil (Ma-%) | | | |
| 47,6 SEPS(85%)/ PP(15%)/52,4 Öl I -g-2,5 AS (Prod.-Nr.:116) | 2,4 AS | 0,7 ZnO/0,06 Zn-Acetat/ 0,003 Zn-Stearat | 220 | Ionomer V |
| 69 (SB)$_n$ (38% PS)/ 31 Öl I-g-2 AS/2 S (Prod.-Nr.:165) | 1,8 AS | 0,5 ZnO/0,04 Zn-Acetat/ 0,002 Zn-Stearat | 210 | Ionomer VI |

EP 0 805 827 B1

**Patentansprüche**

1. Verfahren zur Herstellung funktionalisierter Polymerer unter Festphasenpfropfpolymerisationsbedingungen, wobei als Rückgratpolymere olefinische Homo- und/oder (Block)Copolymere und/oder konjugierte dienische Homo- sowie statistische bzw. alternierende Copolymere und/oder Blockcopolymere, einschließlich die entsprechenden selektiv hydrierten Polymeren, mit gewichtsmittleren Molekulargewichten Mw von 10.000 bis 1.000.000 in ölgestreckter Form unter Verwendung von 10 Masseteilen bis zu einer Maximalkonzentration entsprechend der Aufnahmefähigkeit obengenannter Rückgratpolymerisate, bei der ihre trocken-fließfähige Konsistenz über den gesamten Pfropfpolymerisationsprozeß noch aufrechterhalten ist, in den Grenzen von 20 bis 400 Masseteilen mineralisches, insbesondere paraffinisches und/oder naphthenisches und/oder aromatisches Öl und/oder natives, insbesondere pflanzliches Öl, jeweils bezogen auf 100 Masseteile Rückgratpolymerisat, mit mindestens einer $\alpha$, $\beta$-ethylenisch ungesättigten Verbindung in einer auf 100 Masseteile Rückgratpolymerisat bezogenen Menge von 0,05 bis 50 Masseteile, wobei diese Verbindung mindestens eine funktionelle Gruppe, ausgewählt unter Mono- und Dicarboxylgruppen, einschließlich davon abgeleiteten Gruppen, wie Amid- bzw. Imid-, Halbester- und besonders Anhydridgruppen, Hydroxy- und Epoxygruppen, Aminogruppen und Silangruppen (Funktionsmonomere), besitzt und, gegebenenfalls als Mischung mit mindestens einer keine dieser funktionellen Gruppen besitzenden $\alpha$- $\beta$-ethylenisch ungesättigten Verbindung, wie Styren bzw. substituierten Styrenen und/oder (Meth-)Acrylaten (Zusatzcomonomere), in einem Massenverhältnis 1 bis 100 % Funktionsmonomer(e) zu 0 bis 99 % Zusatzcomonomer(e), wobei der auf die Rückgratpolymermasse bezogene Gesamtanteil an aufgepfropften Funktions- plus Zusatzcomonomeren 0,05 bis 50 % beträgt, unter Verwendung eines radikalischen Initiators mit einer Zehnstunden-Halbwertstemperatur von 40 bis 80 °C gepfropft werden.

2. Verfahren zur Herstellung funktionalisierter Polymerer nach Anspruch 1, wobei als Rückgratpolymere olefinische Homo- und/oder (Block-)Copolymere mit gewichtsmittleren Molekulargewichten Mw von 20.000 bis 500.000 in ölgestreckter Form unter Verwendung von 10 Masseteilen bis zu einer Maximalkonzentration entsprechend der Aufnahmefähigkeit obengenannter Rückgratpolymerer, bei der ihre trocken-fließfähige Konsistenz über den gesamten Pfropfpolymerisationsprozeß noch aufrechterhalten ist, in den Grenzen von 20 bis 200 Masseteilen mineralisches paraffinisches und/oder naphthenisches und/oder aromatisches Öl und/oder pflanzliches Öl, jeweils bezogen auf 100 Masseteile Rückgratpolymerisat, eingesetzt werden.

3. Verfahren zur Herstellung funktionalisierter Polymerer nach Anspruch 1, wobei als Rückgratpolymere konjugierte dienische Homo- sowie statistische bzw. alternierende Copolymere und/oder Blockcopolymere, einschließlich die entsprechenden selektiv hydrierten Polymeren, mit gewichtsmittleren Molekulargewichten Mw von 20.000 bis 1.000.000 in ölgestreckter Form unter Verwendung von 20 Masseteilen bis zu einer Maximalkonzentration entsprechend der Aufnahmefähigkeit obengenannter Rückgratpolymerer, bei der ihre trocken-fließfähige Konsistenz über den gesamten Pfropfpolymerisationsprozeß noch aufrechterhalten ist, in den Grenzen von 50 bis 400 Masseteilen mineralisches paraffinisches und/oder naphthenisches und/oder aromatisches Öl und/oder pflanzliches Öl, jeweils bezogen auf 100 Masseteile Rückgratpolymerisat, eingesetzt werden.

4. Verfahren zur Herstellung funktionalisierter Polymerer nach den Ansprüchen 1 und 3, wobei als Rückgratpolymere selektiv hydrierte Blockcopolymere aus mindestens zwei monovinylsubstituierten aromatischen Kohlenwasserstoff-Polymerblöcken mit einem auf deren aromatische Doppelbindungen bezogenen Hydriergrad $\leq$ 20 % und mindestens einem durch Polymerisation eines konjugierten Diens oder Gemisches aus mindestens zwei konjugierten Dienen erhaltenen Polymerblock, der bis zu einem Grad der ethylenischen Unsättigung von $\leq$ 20 % hydriert worden ist, wobei das unhydrierte Vorläufer-Blockcopolymerisat ein gewichtsmittleres Molekulargewicht Mw von 20.000 bis 1.000.000 sowie einen Anteil Vinylaromateinheiten von 5 bis 95 Masse-% besitzt und die aus der (den) konjugierten Dienverbindung(en) gebildeten Einheit Vinylgruppengehalt von 10 bis 80 % enthält, gegebenenfalls in Abmischung mit 0 bis 300 Masseteilen olefinisches Homo- und/oder Copolymerisat, bezogen auf 100 Masseteile selektiv hydriertes Blockcopolymerisat, eingesetzt werden.

5. Verfahren zur Herstellung funktionalisierter Polymerer nach den Ansprüchen 1, 3 und 4, wobei als Rückgratpolymere selektiv hydrierte lineare Dreiblockcopolymere mit einem Massenanteil an Styreneinheiten von 7 bis 50 % und einem Grad der ethylenischen Unsättigung der hydrierten Dienblöcke $\leq$ 10 %, dessen unhydriertes Vorläufer-Blockcopolymerisat aus zwei endständigen Polystyrenblöcken A mit gleichen oder unterschiedlichen zahlenmittleren Molekulargewichten Mn zwischen 4.000 und 100.000 und einem mittelständigen Poly(Butadien und/oder Isopren)-Block mit einem zahlenmittleren Molekulargewicht Mn zwischen 10.000 und 200.000 (ABA-Dreiblockstruktur) und einem Vinylgruppengehalt von 25 bis 65 % besteht, eingesetzt werden.

**6.** Verfahren zur Herstellung funktionalisierter Polymerer nach den Ansprüchen 1, 3, und 4, wobei als Rückgratpolymere selektiv hydrierte lineare Blockcopolymere mit einem Massenanteil an Styreneinheiten von 7 bis 50 % und einem Grad der ethylenischen Umsättigung ≤ 10 %, dessen unhydriertes Vorläufer-Block-copolymerisat aus zwei Polystyrenblöcken A mit gleichen oder unterschiedlichen zahlenmittleren Molekulargewichten Mw zwischen 4.000 und 100.000 und zwei Poly(Butadien und/oder Isopren)-Blöcken mit gleichen oder unterschiedlichen zahlenmittleren Molekulargewichten Mn zwichen 10.000 und 200.000 (ABAB-Vierblockstruktur) und einem Vinylgruppengehalt von 25 bis 65 % besteht, eingesetzt werden.

**7.** Verfahren zur Herstellung funktionalisierter Polymerer nach den Ansprüchen 1, 3 und 4, wobei als Rückgratpolymere selektiv hydrierte radiale Blockcopolymere mit einer mittleren Sternastzahl von 3 bis 16 und einem Grad der ethylenischen Unsättigung der hydrierten Dienblöcke ≤ 10 %, dessen unhydriertes Vorläufer-Blockcopolymerisat ein gewichtsmittleres Molekulargewicht Mw von 30.000 bis 800.000 und einen Gehalt an Vinylaromateinheiten von 5 bis 75 Masse-% besitzt und die aus dem (den) konjugierten Dien(en) gebildete Einheit einen Vinylgruppengehalt von 25 bis 65 % aufweist, eingesetzt werden.

**8.** Verfahren zur Herstellung funktionalisierter Polymerer nach einem oder mehreren der Ansprüche 1 bis 7, wobei den als Rückgratpolymere eingesetzten olefinischen Homo- und/oder (Block-)Copolymeren und/oder konjugierten dienischen Homo- sowie statistischen bzw. alternierenden Copolymeren und/oder Block-copolymeren, einschließlich den entsprechenden selektiv hydrierten Polymeren, 0 bis 200 Masseteile eines faserigen und/oder teilchenförmigen Füllstoffes, bezogen auf 100 Masseteile Polymeranteil, hinzugefügt ist.

**9.** Verfahren zur Herstellung funktionalisierter Polymerer nach einem oder mehreren der Ansprüche 1 bis 8, wobei den als Rückgratpolymere eingesetzten olefinischen Homo- und/oder (Block-)Copolymeren und/oder konjugierten dienischen Homo- sowie statistischen bzw. alternierenden Copolymeren und/oder Blockcopolymeren, einschließlich den entsprechenden selektiv hydrierten Polymeren, 10 bis 100 Masseteile eines teilchenförmigen Füllstoffes auf Calciumcarbonat-Basis, bezogen auf 100 Masseteile Polymeranteil, hinzugefügt ist.

**10.** Verfahren zur Herstellung funktionalisierter Polymerer nach den Ansprüchen 1, 5, 8 und 9, wobei der Pfropfpolymerisationsansatz selektiv hydrierte lineare Styren/Dien/Styren-Dreiblockcopolymere mit einem gewichtsmittleren Molekulargewicht Mw von 40.000 bis 800.00 und einem Massenanteil an Styreneinheiten von 7 bis 50 % sowie einem Grad der ethylenischen Unsättigung der hydrierten Dienblöcke ≤ 5 % in Form von Rückgrat-Compounds der Zusammensetzung

( a ) 30 bis 95 Masse-% Styren/Ethylen-Propylen oder Butylen/Styren Dreiblock-copolymerisat (SEPS oder SEBS),
( b ) 5 bis 70 Masse-% olefinisches Homo- und/oder Copolymerisat und
( c ) 0 bis 50 Masse-% teilchenförmiger Füllstoff enthält.

**11.** Verfahren zur Herstellung funktionalisierter Polymerer nach den Ansprüchen 1 bis 10, wobei als Funktionsmonomere Acrylsäure und/oder Methacrylsäure und/oder Maleinsäureanhydrid verwendet werden.

**12.** Verfahren zur Herstellung funktionalisierter Polymerer nach den Ansprüchen 1 bis 10, wobei als Funktionsmonomere Glycidylmethacrylat und/oder Hydroxyethylacrylat und/oder Hydroxypropylmethacrylat verwendet werden.

**13.** Verfahren zur Herstellung funktionalisierter Polymerer nach den Ansprüchen 1 bis 10, wobei als Funktionsmonomere (N-t-Butylamino)ethylmethacrylat und/oder (N, N-Dimethylamino)ethylacrylat und/oder (N, N-Dimethylamino)ethylmethacrylat und/oder (N, N-Diethylamino)ethylacrylat verwendet werden.

**14.** Verfahren zur Herstellung funktionalisierter Polymerer nach den Ansprüchen 1 bis 10, wobei als Funktionsmonomere (γ-Methacryloyloxypropyl)-trimethoxy-silan und/oder Tris-(2-methoxyethoxy)-vinylsilan verwendet werden.

**15.** Verfahren zur Herstellung funktionalisierter Polymerer nach einem oder mehreren der Ansprüche 1 bis 14, wobei als Zusatzcomonomere Styren und/oder α-Methyl-styren und/oder Ethylacrylat und/oder n-Butylacrylat und/oder Methyl-methacrylat in einem Massenverhältnis 1 bis 99 % Funktionsmonomer(e) zu 99 bis 1 % Zusatzcomonomer (e) verwendet werden.

**16.** Verfahren zur Herstellung funktionalisierter Polymerer nach Anspruch 11, wobei die aufgepfropften Moleküleinheiten mit mindestens einer Mono- oder Dicarboxylgruppe, einschließlich davon abgeleiteter Anhydridgruppen, durch mindestens ein ein- und/oder zwei- und/oder dreiwertiges aus den Verbindungen des Lithiums, Natriums, Kaliums, Magnesiums, Calciums, Zinks und Aluminiums ausgewähltes Metallion unter Verwendung von einem Molverhältnis Metall im Vernetzungsmittel zur aufgepfropften Carboxyl- und/oder Anhydridgruppe im funktionalisierten Polymer von 0,1 bis 3,0 vernetzt werden.

**Claims**

1. A process to produce functionalized polymers under solid-phase graft polymerization conditions whereby olefinic homopolymers and/or (block) copolymers and/or conjugated dienic homopolymers and statistical or alternating copolymers and/or block copolymers, including the respective selectively hydrogenated polymers with a weight-average molecular weight (Mw) of 10.000 to 1,000,000 in an oil-extended form, are grafted as the backbone polymers using a radical initiator with a ten-hour-half-temperature of 40C to 80C, and using 10 parts by weight up to a maximum concentration depending on the absorptivity of said backbone polymers, at which their dry-flowing consistency is just maintained through the whole graft polymerization process, within the limits of 20 to 400 parts by weight of mineral, and specifically paraffinic and/or naphthenic and/or aromatic oil and/or native oil, specifically plant oil, always relative to 100 parts by weight of the backbone polymer, with at least one $\alpha$, $\beta$ ethylenic unsaturated compound in a volume of 0.05 to 50 parts by weight relative to 100 parts by weight of the backbone polymer, whereby this compound has at least one functional group, selected from monocarboxylic and dicarboxylic groups, including any derivative groups, such as amidic or imidic groups, half-ester groups or specifically anhydride groups, hydroxy and epoxy groups, amino or silane groups (function monomers) and whereby said compound may be a mixture with at least one $\alpha$, $\beta$ ethylenic unsaturated compound having no such functional group, such as styrene or substituted styrenes and/or (meth-)acrylates (make-up comonomers) in a mass ratio of I through 100 % of function monomer(s) to 0 through 99 % of make-up comonomer(s), whereby the total component of grafted function plus make-up comonomers relative to the backbone polymer weight is 0.05 to 50 %.

2. A process to producc functionalized polymers according to claim 1, whereby olefinic homopolymers and/or (block) copolymers with a weight-average molecular weight (Mw) of 20,000 to 500,000 in an oil-extended form are used as backbone polymers. using 10 parts by weight up to a maximum concentration depending on the absorptivity of said backbone polymers at which their dry-flowing consistency is just maintained through the whole grafting process, in the limits of 20 to 200 parts by weight of mineral paraffinic and/or naphthenic and/or aromatic oil and/or plant oil, always relative to 100 parts by weight of backbone polymer.

3. A process to produce functionalized polymers according to claim 1, whereby conjugated dienic homopolymers and statistical or alternating copolymers and/or block copolymers are used as backbone polymers, including the respective selectively hydrogenated polymers with a weight-average molecular weight (Mw) of 20,000 to 1,000,000 in an oil-extended form, using 20 parts by weight up to a maximum concentration depending on the absorptivity of said backbone polymers at which their dry-flowing consistency is just maintained through the whole grafting polymerization process, in the limits of 50 to 400 parts by weight of mineral paraffinic and/or naphthenic and/or aromatic oil and/or plant oil, always relative to 100 parts by weight of the backbone polymer.

4. A process to produce functionalized polymers according to claims I and 3. whereby selectively hydrogenated block copolymers are used as backbone polymers, of at least two monovinyl-substituted aromatic hydrocarbon polymer blocks with a degree of hydrogenation of $\leq$ 20 % relative to their aromatic double bonds and with at least one polymer block obtained through polymerization of a conjugated diene or a mixture of at least two conjugated dienes, which hydrogenated to a degree of ethylenic unsaturation of $\leq$ 20 %, whereby the unhydrogenated precursor block copolymer has a weight-average molecular weight (Mw) of 20,000 to 1,000,000 and a component of vinyl aromatics units of 5 to 95 percent by weight, and the unit consisting of the conjugated diene compound(s) has (have) a vinyl group content of 10 % to 80 %, also in a mixture with 0 to 300 parts by weight of olefinic homopolymer and/or copolymer relative to 100 parts by weight of selectively hydrogenated block copolymer.

5. A process to produce functionalized polymers according to claims 1, 3 and 4, whereby selectively hydrogenated linear three-block copolymers are used as backbone polymers, with a styrene unit weight component of 7 % to 50 % and with a degree of ethylenic unsaturation of the hydrogenated diene blocks of $\leq$ 10 %, the unhydrogenated precursor block copolymer of which consists of two polystyrenc blocks A in end position with a similar or different number-average molecular weight (Mn) of between 4,000 and 100,000 and a poly(butadiene and/or isoprene) block in center position with a number-average molecular weight (Mn) of between 10,000 and 200,000 (ABA three-block structure) and a vinyl group component of 25 % to 65 %.

6. A process to produce functionalized polymers according to claims 1, 3 and 4, whereby selectively hydrogenated linear three-block copolymers are used as backbone polymers, with a styrene unit weight component of 7 % to 50 % and with a degree of ethylenic unsaturation of the hydrogenated diene blocks of < 10 %, the unhydrogenated precursor block copolymer of which consists of two polystyrene blocks A with a similar or different number-average molecular weight (Mn) of between 4,000 and 100,000 and two poly(butadiene and/or isoprene) blocks with a similar or different number-average molecular weight (Mn) of between 10,000 and 200,000 (ABAB four-block structure) and a vinyl group component of 25 % to 65 %.

7. A process to produce functionalized polymers according to claims 1, 3 and 4, whereby selectively hydrogenated radial block copolymers are used as backbone polymers, with an average star branching number of 3 to 16 and a degree of ethylenic unsaturation of the hydrogenated diene blocks of ≤ 10 %, the unhydrogenated precursor block copolymer of which has a weight-average molecular weight (Mw) of 30,000 to 800,000 and a component of vinyl aromatics units of 5 to 75 percent by weight and whereby the unit formed from the conjugated diene(s) has a vinuyl group content of 25 % to 65 %.

8. A process to produce functionalized polymers according to one or several of claims 1 through 7, whereby 0 to 200 parts by weight of a fibrous and/or particle-shaped filler, relative to 100 parts by weight of polymer component, are added to the olefinic homopolymers and/or (block) copolymers and/or conjugated dienic homopolymers and statistical or alternating copolymers and/or block copolymers, including the respective selectively hydrogenated polymers, used as backbone polymers.

9. A process to produce functionalized polymers according to one or several of claims 1 through 8, whereby 10 to 100 parts by weight of a particle-shaped filler on a calcium carbonate basis, relative to 100 parts by weight of the polymer component, are added to the olefinic homopolymers and/or (block) copolymers and/or conjugated dienic homopolymers and statistical or alternating copolymers and/or block copolymers including the corresponding selectively hydrogenated polymers used as backbone polymers.

10. A process to produce functionalized polymers according to claims 1, 5, 8 or 9, whereby the graft polymerization feedstock contains selectively hydrogenated linear styrene/diene/styrene three-block copolymers with a weight-average molecular weight (Mw) of 40,000 to 800,000 and a component by weight of styrene units between 7 % and 50 % as well as a degree of ethylenic unsaturation of the hydrogenated diene blocks of ≤ 5 % in the form of backbone compounds of a composition as follows:

    (a) 30 to 95 percent by weight of styrene/ethylene-propylene or butylene/styrene three-block copolymer (SEPS or SEBS);
    (b) 5 to 70 percent by weight of olefinic homopolymer and/or copolymer; and
    (c) 0 to 50 percent by weight of a particle-shaped filler.

11. A process to produce functionalized polymers according to any of claims 1 through 10, whereby acrylic acid and/or methacrylic acid and/or maleic anhydride are used as function monomers.

12. A process to produce functionalized polymers according to any of claims 1 through 10, whereby glycidyl methacrylate and/or hydroxyethylacrylate and/or hydroxypropylmethacrylate are used as function monomers.

13. A process to produce functionalized polymers according to any of claims 1 through 10, whereby (N-t-butyl amino) ethyl methacrylate and/or (N, N-dimethylamino) ethyl acrylate and/or (N, N-dimethylamino) ethyl methacrylate and/or (N, N-diethylamino) ethyl acrylate are used as function monomers.

14. A process to produce functionalized polymers according to any of claims 1 through 10, whereby (γ-methacryloyloxypropyl)-trimethoxysilane and/or tris-(2-methoxyethoxy)-vinyl silane are used as function monomers.

15. A process to produce functionalized polymers according to one or several of claims 1 through 14, whereby styrene and/or α methyl styrcne and/or ethyl acrylate and/or n-butyl acrylate and/or methyl methacrylate in a mass ratio of l % through 99 % function monomer(s) to 99 % through 1 % make-up comonomer(s) are used as make-up comonomers.

16. A process to produce functionalized polymers according to claim 11, whereby the grafted molecular units with at least one monocarboxylic or one dicarboxylic group, including derivative anhydride groups, are cross-linked through at least one monovalent and/or bivalent and/or trivalent metal ion selected from the compounds of lithium, sodium, potassium, magnesium, calcium, zinc or aluminum using a molar ratio of metal in the cross-linking agent to the grafted carboxylic and/or anhydride group in the functionalized polymer of 0.1 to 3.0.

## Revendications

1. Procédé de production de polymères fonctionnalisés sous conditions de polymérisation avec greffage en phase solide, les polymères de support, étant des homopolymères et/ou des copolymères (en masse) oléfiniques et/ou des homopolymères diéniques conjugués ainsi que des copolymères statistiques ou alternants et/ou des copolymères en masse, y compris les polymères sélectivement hydrogénés correspondants, avec des poids moléculaires de poids moyens Mw de 10.000 à 1.000.000 sous forme étendue en huile au moyen de 10 parties en poids jusqu'à la concentration maximale correspondant à la capacité d'absorption des polymères de support précités, selon laquelle la consistance d'écoulement à sec de ces derniers est encore maintenue durant tout le processus de polymérisation avec greffage, dans les limites de 20 à 400 parties en poids d'huile minérale en particulier paraffinique, et/ou naphténique et/ou aromatique et/ou d'huile brute, en particulier végétale, toutes rapportées à 100 parties en poids de polymère de support. avec au moins une liaison $\alpha$, $\beta$ éthylénique non saturée dans une quantité de 0,05 jusqu'à 50 parts en poids rapportée à 100 parts en poids de polymère de support, cette liaison possédant au moins un groupe fonctionnel, sélectionné parmi les groupes de monocarboxyle et de bicarboxyle, y compris les groupes en étant dérivés comme les groupes d'amide, d'imide, de demi-ester et en particulier ceux d'anhydride, les groupes hydroxy et époxy, les groupes amino et silane (monomères fonctionnels), et éventuellement en tant que mélange avec au moins une de ces liaisons non saturées éthyléniques,$\alpha$ $\beta$ ne possédant aucun de ces groupes fonctionnels, comme le styrène ou styrènes substitués et/ou des (méth) acrylates (comonomères additionnels), dans un rapport en poids de 1 à 100 % de monomère(s) fonctionnel(s) pour 0 jusqu'à 99 % de comonomère(s) additionnel(s), la part totale de comonomères fonctionnels plus comonomères additionnels ajoutés par greffage étant de 0,05 jusqu'à 50 % par rapport au poids de polymères de support, seront greffés par l'emploi d'un initiateur radicalique à température de demi-atténuation de 10 heures de 40 à 80 °C.

2. Procédé de production de polymère fonctionnalisé selon la spécification 1, les polymères de support étant des homopolymères et /ou des copolymères (en masse) oléfiniques avec des poids moléculaires de poids moyens Mw de 20.000 à 500.000 sous forme étendue en huile au moyen de 10 parties en poids jusqu'à la concentration maximale correspondant à la capacité d'absorption des polymères de support précités. selon laquelle la consistance d'écoulement à sec de ces derniers est encore maintenue durant tout le processus de polymérisation avec greffage, dans les limites de 20 à 200 parties en poids d'huile minérale paraffinique, et/ ou naphténique et/ ou aromatique et/ ou d'huile végétale, toutes rapportées à 100 parties en poids de polymère de support.

3. Procédé de production de polymère fonctionnalisé selon la spécification 1, les polymères de support étant des homopolymères diéniques conjugués ainsi que des copolymères statistiques ou alternants et/ou des copolymères en masse, y compris les polymères hydrogénés sélectivement correspondants, avec des poids moléculaires de poids moyens Mw de 20.000 à 1.000.000 sous forme étendue en huile au moyen de 20 parties en poids jusqu'à la concentration maximale correspondant à la capacité d'absorption des polymères de support précités, selon laquelle la consistance d'écoulement à sec de ces derniers est encore maintenue durant tout le processus de polymérisation avec greffage, dans les limites de 50 à 400 parties en poids d'huile minérale paraffinique, et/ou naphténique et/ou aromatique et/ou d'huile végétale, toutes rapportées à 100 parties en poids de polymère de support.

4. Procédé de production de polymère fonctionnalisé selon les spécifications 1 et 3, les polymères de support utilisés étant des copolymères en masse sélectivement hydrogénés constitués au moins de deux masses de polymères d'hydrocarbures aromatiques substitués au monovinyle avec, rapporté à leurs doubles liaisons aromatiques, un degré d'hydrogénation de < 20 % et au moins un polymère en masse obtenu par polymérisation d'un diène conjugué ou d'un mélange d'au moins deux diènes conjugués et qui fut hydrogéné jusqu'à un degré d'insaturation éthylénique de $\leq$ 20 %, le copolymérisat en masse précurseur non hydrogéné possédant un poids moléculaire de poids moyens Mw de 20.000 à 1.000.000 ainsi qu'une part d'unités d'aromate de vinyle de 5 à 95 % en poids et contenant, à partir de l'unité de la (des) liaison(s) conjuguée(s) de diène une teneur en groupe de vinyle de 10 à 80 %, éventuellement en mélange avec de 0 à 300 parts en poids d'homopolymère et/ ou de copolymère oléfinique, par rapport à 100 parts en poids de copolymère en masse sélectivement hydrogéné.

5. Procédé de production de polymère fonctionnalisé selon les spécifications 1, 3 et 4, les polymères de support

EP 0 805 827 B1

utilisés étant des copolymères en trois masses linéaires sélectivement hydrogénés avec une part en poids en unités de styrène de 7 à 50 % et un dégré d'insaturation éthylénique des masses de diène hydrogénées ≤ 10 %, dont le copolymère en masse précurseur non hydrogéné est constitué de deux masses de polystyrène A en fins de chaîne avec une masse moléculaire moyenne en nombre égale ou différente Mn entre 4.000 et 100.000 et d'une masse de poly-(butadiène et/ou isoprène) au centre de la chaîne ayant une masse moléculaire moyenne en nombre Mn entre 10.000 et 200.000 (structure trois masses ABA) et une teneur en groupe de vinyle de 25 à 65 %.

6. Procédé de production de polymère fonctionnalisé selon les spécifications 1, 3 et 4, les polymères de support utilisés étant des copolymères en masse linéaires sélectivement hydrogénés avec une part en poids en unités de styrène de 7 à 50 % et un dégré d'insaturation éthylénique ≤ 10 %, dont le copolymère en masse précurseur non hydrogéné est constitué de deux masses de polystyrène A avec une masse moléculaire moyenne en nombre égale ou différente Mn entre 4.000 et 100.000 et de deux masses de poly-(butadiène et/ ou isoprène) ayant une masse moléculaire moyenne en nombre égale ou différente Mn entre 10.000 et 200.000 (structure quatre masses ABAB) et une teneur en groupe de vinyle de 25 à 65 %.

7. Procédé de production de polymère fonctionnalisé selon les spécifications 1, 3 et 4, les polymères de support utilisés étant des copolymères en masse radicaux sélectivement hydrogénés avec un nombre moyen de branches en étoile de 3 à 16 et un degré d'insaturation éthylénique des blocs de diène hydrogénés ≤ 10 %, dont le copolymère en masse précurseur non hydrogéné possède un poids moléculaire de poids moyens Mw de 30.000 à 800.000 ainsi qu'une teneur d'unités d'aromate de vinyle de 5 à 75 % en poids et présentant. à partir de l'unité de la (des) liaison(s) conjuguée(s) de diène. une teneur en groupe de vinyle de 25 à 65 %.

8. Procédé de production de polymère fonctionnalisé selon une ou plusieurs spécifications de 1 jusqu'à 7, où sont ajoutés aux polymères de support, étant des homopolymères et/ou des copolymères (en masse) oléfiniques et/ ou des homopolymères diéniques conjugués ainsi que des copolymères statistiques ou alternants et/ou des copolymères en masse, y compris les polymères hydrogénés sélectivement correspondants, de 0 à 200 parts en poids d'une matière de charge fibreuse et/ou en forme de particules, rapportées à 100 parts en poids de polymère employé.

9. Procédé de production de polymère fonctionnalisé selon une ou plusieurs spécifications de 1 jusqu'à 8, où sont ajoutés aux polymères de support, étant des homopolymères et/ou des copolymères (en masse) oléfiniques et/ ou des homopolymères diéniques conjugués ainsi que des copolymères statistiques ou alternants et/ou des copolymères en masse, y compris les polymères hydrogénés sélectivement correspondants, de 10 à 100 parts en poids d'une matière en forme de particules sur carbonate de calcium, rapportées à 100 parts en poids de polymère employé.

10. Procédé de production de polymère fonctionnalisé selon les spécifications 1, 5, 8 et 9, la formule de polymérisation avec greffage contenant des polymères en trois masses de styrène/diène/styrène linéaires sélectivement hydrogénés avec un poids moléculairc de poids moyen Mw de 40.000 à 800.000 et une part en poids d'unités de styrène de 7 jusqu'à 50 % ainsi qu'un degré de insaturation éthylénique des masses de diène hydrogénées ≤ 5 % sous forme de compounds de support de constitution suivante

(a) de 30 à 95 % en poids de styrène / éthylène - propylène ou de copolymère trois masses de butylène / styrène (SEPS ou SEBS),

( b ) de 5 à 70 % en poids d'homopolymérisat et/ ou de copolymérisat oléfinique et

(c) de 0 à 50 % en poids de matière de charge en forme de particules.

11. Procédé de production de polymère fonctionnalisé selon les spécifications de 1 jusqu'à 10, les monomères fonctionnels utilisés étant de l'acide acrylique et/ou de l'acide méthacrylique et/ou de l'anhydride maléique.

12. Procédé de production de polymère fonctionnalisé selon les spécifications de 1 jusqu'à 10, les monomères fonctionnels utilisés étant du méthacrylate de glycidyle et/ou de l'acrylate d'hydroxyéthyle et/ou du méthacrylate d'hydroxypropyle.

13. Procédé de production de polymère fonctionnalisé selon les spécifications de 1 jusqu'à 10, les monomères fonc-

31

tionnels utilisés étant du méthacrylate de (N-t-butylamino) éthyle et/ou de l'acrylate de (N,N-diméthylamino) éthyle et/ou du méthacrylate de (N,N-diméthylamino) éthyle et/ou de l'acrylate de (N, N-diéthylamino) éthyle.

14. Procédé de production de polymère fonctionnalisé selon les spécifications de 1 jusqu'à 10, les monomères fonctionnels utilisés étant du (γ-méthacryloyloxypropyle)-triméthoxysilane et/ou du silane de tris-(2-méthoxyéthoxy)-vinyle.

15. Procédé de production de polymère fonctionnalisé selon une ou plusieurs spécifications de 1 jusqu'à 14, les comonomères additionnels utilisés étant du styrène et/ou styrène de méthyle α et/ou de l'acrylate d'éthyle et ou de l'acrylate de n-butyle et/ou du méthacrylate de méthyle dans un rapport de poids de 1 à 99 % de monomère(s) fonctionnel(s) pour 99 à 1 % de comonomère(s) additionnel(s).

16. Procédé de production de polymère fonctionnalisé selon la spécification 11, les unités moléculaires greffées avec au moins un groupe monocarboxyle ou dicarboxyle. y compris les groupes d'anhydride en dérivant, étant réticulées par au moins un ion métallique monovalent, bivalent ou trivalent choisi à partir de liaisons de lithium, de sodium, de potassium, de magnésium, de calcium, de zink et d'aluminium au moyen d'un rapport molaire métal dans le produit de réticulation envers le groupe de carboxyle et/ou d'anhydride dans le polymère fonctionnalisé de 0,1 jusqu'à 3,0.